(19) Europäisches Patentamt
European Patent Office
Office européen des brevets

(11) EP 3 191 495 B1

(12) # EUROPÄISCHE PATENTSCHRIFT

(45) Veröffentlichungstag und Bekanntmachung des Hinweises auf die Patenterteilung:
**09.10.2019 Patentblatt 2019/41**

(21) Anmeldenummer: **15766415.2**

(22) Anmeldetag: **28.08.2015**

(51) Int Cl.:
***C07F 7/04*** *(2006.01)* ***C07F 7/08*** *(2006.01)*
***C08G 77/20*** *(2006.01)*

(86) Internationale Anmeldenummer:
**PCT/EP2015/069775**

(87) Internationale Veröffentlichungsnummer:
**WO 2016/037871 (17.03.2016 Gazette 2016/11)**

(54) **BIOLOGISCH ABBAUBARE, IN DER MEDIZINTECHNIK ODER IN DER BIOLOGIE EINSETZBARE HYBRIDPOLYMERE, AUSGANGS-SILANE HIERFÜR SOWIE DEREN HERSTELLUNGSVERFAHREN UND VERWENDUNG**

BIODEGRADABLE HYBRID POLYMERS USABLE IN MEDICAL TECHNOLOGY OR IN BIOLOGY, STARTING SILANES THEREFOR, AND PREPARATION PROCESSES THEREFOR AND USES THEREOF

POLYMÈRES HYBRIDES BIODÉGRADABLES, UTILISABLES EN BIOLOGIE OU EN MÉDICINE, SILANES DE DÉPART DESTINÉS À CES POLYMÈRES ET LEUR PROCÉDÉ DE FABRICATION ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2014 DE 102014112907**
**17.12.2014 DE 102014118901**
**07.07.2015 DE 102015110979**

(43) Veröffentlichungstag der Anmeldung:
**19.07.2017 Patentblatt 2017/29**

(73) Patentinhaber: **Fraunhofer-Gesellschaft zur Förderung der angewandten Forschung e.V.
80686 München (DE)**

(72) Erfinder:
- **WOLTER, Herbert
97941 Tauberbischofsheim (DE)**
- **NIQUE, Somchith
97249 Eisingen (DE)**
- **OBEL, Kerstin
72074 Tübingen (DE)**

(74) Vertreter: **Strehl Schübel-Hopf & Partner
Maximilianstrasse 54
80538 München (DE)**

(56) Entgegenhaltungen:
**WO-A1-86/00084 WO-A1-2011/098460
JP-A- H08 199 036**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 191 495 B1

Printed by Jouve, 75001 PARIS (FR)

## Beschreibung

Die vorliegende Erfindung betrifft neuartige, anorganisch kondensierbare Silane und deren Kondensate und/oder Polymerisate. Diese Silane enthalten eine(n) oder mehrere über Sauerstoff an das Silicium gebundene Substituenten bzw. Gruppen mit Ester-, ggf. darüber hinaus mit Ether- und/oder Thioetherbindungen, sowie organisch polymerisierbare Einheiten wie C=C-Doppelbindungen oder ringöffnende Systeme, z.B. Epoxygruppen. Die Silane lassen sich anorganisch kondensieren und/oder organisch über die C=C-Doppelbindungen polymerisieren. Eine solche organische Polymerisation kann beispielsweise mit Hilfe von 2-Photonen-Polymerisation (2PP) erfolgen, so dass sich strukturierte, im Wesentlichen monomerfreie Materialien erhalten lassen. Diese sind stabil gegenüber einer Bestrahlung mit γ-Strahlen, so dass sie sterilisierfähig sind. Durch Variation des Anteils an anorganisch vernetzbaren Einheiten und/oder an organisch polymerisierbaren Einheiten lassen sich die mechanischen Eigenschaften der aus den Silanen erzeugten Hybridpolymere gezielt so einstellen, dass sie denjenigen natürlicher, weicher oder harter Gewebe ähneln. Sie lassen sich von Zelltypen wie Endothelzellen besiedeln und eignen sich daher z.B. als Scaffolds zur Stabilisierung und Züchtung von Zellen. Die Hybridpolymere werden bei Lagerung in Puffern innerhalb weniger Wochen mehr oder weniger stark zersetzt, wobei toxisch unbedenkliche, meist wasserlösliche, kleinteilige Abbauprodukte wie $C_2$-Dicarbonsäuren entstehen. Auch wird dabei die Sauerstoffbrücke zwischen dem die Estergruppen enthaltenden Substituenten und dem Siliciumatom gespalten. Damit sind die erfindungsgemäßen Hybridpolymere geeignet zur Herstellung von biologisch abbaubaren bzw. resorbierbaren Implantaten oder Scaffolds mit für den jeweiligen Verwendungszweck angepassten mechanischen Daten.

Die Wiederherstellung von krankem oder beschädigtem Gewebe bleibt eine der wichtigsten Herausforderungen in der regenerativen Medizin. Das Wachstum von Zellen auf dreidimensionalen (3D), meist porösen "Scaffolds" (feinstrukturierten Gerüsten) zur Gewebebildung ("tissue engineering, kurz T.E.) ist ein vielversprechender Ansatz zur Herstellung von autologem Gewebe. Scaffolds für T.E. müssen biokompatibel und biodegradierbar sein, die Zellanhaftung und die Zellproliferation unterstützen und an die mechanischen Anforderungen an das jeweilige Gewebe angepasst sein.

Zur Herstellung von Scaffolds gibt es zahlreiche Verfahren. Die häufigsten der älteren konventionellen Methoden sind Solvent-casting, Particulate leaching, Gas foaming, Phasenseparation, Gefriertrockenen, Elektrospinning und Self-Assembly. Doch erlaubt keine dieser Herstellungsmethoden eine präzise Kontrolle über Porengröße, -geometrie und räumliche Verteilung der Poren. Außerdem kann eine Interkonnektivität nicht sichergestellt werden. Neuere Verfahren umgehen diese Nachteile. Zur Herstellung hochkomplexer Strukturen können dreidimensionale Objekte mit Hilfe eines Computer-generierten Designs (*computer-aided designs,* CAD) aus mehreren Schichten aufgebaut werden. Verfahren, die sich diese Technik zu Nutze machen, werden als *Rapid Prototyping*- oder *Solid Free-Form*-Verfahren bezeichnet. Mit diesen Methoden können anatomisch angepasste Scaffolds auf Grundlage von Computer-Tomographie (CT)- oder Magnet-Resonanz-Tomographie (MRT)-Daten erzeugt werden. Häufig angewendet wird die Stereolithographie. Bei dieser Technik wird eine chemische Reaktion - die Photopolymerisation - durch elektromagnetische Strahlung initiiert. Das zu strukturierende Material beziehungsweise die zu strukturierende Materialformulierung muss folglich die Anforderung erfüllen, mit Licht reagieren zu können. Dadurch findet in den exponierten Bereichen ein Phasenübergang von flüssig zu fest statt. Im nachfolgenden Entwicklungsschritt wird somit nur das verbliebene flüssige Material weggelöst. Mit Hilfe eines Laserstrahls können so schichtweise Strukturen erzeugt werden. Vorteile dieser Methode sind, dass hochorganisierte dreidimensionale Scaffolds mit definierter Porosität, Porengrößße und Interkonnektivität der Poren mit hoher Reproduzierbarkeit hergestellt werden können und dies mit nur wenigen Prozessschritten möglich ist. Einschränkungen in der Polymerwahl und Upscaling-probleme sind dagegen von Nachteil. Eine gute Auflösung bietet ein Spezialfall der Stereolithographie, nämlich die Zwei-Photonen-Polymerisation (*two photon polymerization,* 2PP). Mit dieser Technik können ultrafeine Strukturen bei hoher Auflösung erzeugt werden. Sie beruht auf der simultanen Absorption von zwei Photonen (*two photon absorption,* TPA), die den Zerfall der Initiatormoleküle und somit auch die nachfolgende chemische Reaktion zwischen den erzeugten Radikalen und den Monomeren auslöst. Für die Anregung sind aufgrund der simultanen Absorption von zwei Photonen sehr hohe Lichtintensitäten nötig, die durch ultrakurze Laserpulse realisiert werden können. Die Rate der Zwei-Photonen-Absorption hängt dabei nichtlinear von der Intensität ab. Infolgedessen findet die Polymerisation nur in einem räumlich eng begrenzten Bereich um den Laserfokus herum statt, wodurch auch Auflösungen von < 100 nm erreicht werden können. Wird der Fokus durch das Material bewegt, werden in den belichteten Bereichen in einem Prozessschritt dreidimensionale Mikrostrukturen erzeugt. Diese Methode bietet den Vorteil, dass sowohl die äußere Form des Scaffolds als auch die intrinsische Porosität der Struktur kontrolliert werden können. Die physiologische Wirkung von extrazellulärer Matrix (ECM) besteht darin, den Zellen im Körper eine Möglichkeit zum Anhaften zu bieten und die Zell- und Gewebefunktionenen wie Differenzierung, Wachstum, Vermehrung und Interaktionen zwischen Zellen zu kontrollieren.

Zur adäquaten Nachahmung der ECM für das *Tissue Engineering* sind aus chemischer Sicht Scaffolds aus Biopolymeren, die mittels 2PP erzeugt wurden, gut geeignet. Bei der Verwendung abbaubarer Scaffoldmaterialien besteht durch die Zerlegung des Gerüsts unter physiologischen Bedingungen zusätzlich die Möglichkeit, Raum für die Zellmigration und -expansion zu schaffen.

Schon seit Längerem werden für die Medizintechnik verwendbare Materialien gesucht, die sich gezielt strukturieren lassen und die trotz dabei erfolgter Polymerisation organischer Gruppen, insbesondere von (Methacrylat- und anderen) C=C-Doppelbindungen biologisch abbaubar sind. So haben F. Claeyssens et al. in "Three-Dimensional Biodegradable Structures Fabricated by Two-Photon-Polymerization", Langmuir 25, 3219-3223 (2009) gezeigt, dass sich aus dem bioabbaubaren Dreiblock-Copolymeren Poly(ε-caprolacton-*co*-trimethylencarbonat)-b-poly-(ethylenglycol)-b-poly(ε-caprolacton-*co*-trimethylencarbonat) mit einem Photoinitiator mit Hilfe der Zwei-Photonen-Polymerisation Strukturen herstellen lassen, die sich als Scaffold eignen könnten. Auch bioabbaubare organisch polymerisierbare Hybridpolymere wurden hierfür bereits in Betracht gezogen. Hierbei handelt es sich in der Regel um Abwandlungen bekannter ORMOCER®e, d.h. um hydrolytisch kondensierte Silan-Verbindungen, die organisch vernetzbare Gruppen tragen. Manche derartige ORMOCERE sind bereits als inhärent biokompatibel beschrieben worden, siehe R. Narayan et al., in Mater. Res. Soc. Symp. P 2005, 845, 51 und in Acta Biomater. 2006, 2, 267. Hybridmaterialien, die unter physiologischen Bedingungen zumindest teilweise auch bioabbaubar sind, wurden von D. Tian et al. im Journal of Polymer Science, Part A- Polymer Chemistry, "Biodegradable and Biocompatible Inorganic-Organic Hybrid Materials. I. Synthesis and Characterization", 1997, 35(11) 2295-2309 beschrieben. R. Houbertz et al. zeigten in Coherence and Ultrashort Pulse Laser Emission, 2010, 583 und in WO 2011/098460 A1 biokompatible, durch 2PP strukturierbare Materialien. Diese enthalten entweder über Si-C-Bindungen angebundene Reste, die organisch polymerisierbare Gruppen tragen, oder sie werden aus einem Gemisch von Silanen mit Si-C-gebundenen, organisch polymerisierbaren Resten und organisch polymerisierbaren Verbindungen erzeugt. Anhand von Beispielen aus WO 2011/098460 A1 konnte dabei gezeigt werden, dass solche strukturierten Materialien in Puffern wie PBS einen Gewichtsverlust erleiden, also bis zu einem gewissen Grad biologisch auf hydrolytischem Wege abbaubar sein müssen, und von Zellen besiedelt werden können.

Biologisch abbaubare, rein organische Materialien, die über eine Polymerisation von C=C-Doppelbindungen hergestellt wurden, haben den Nachteil, dass sie nur einen relativ geringen Anteil an organisch polymerisierbaren Gruppen enthalten können, damit ihre Abbaubarkeit gewährleistet ist, die vor allem auf dem Aufbrechen von im Molekül vorzugsweise mehrfach vorhandenen Ester- und/oder Ethergruppen beruht. Über Veresterungen oder dgl. hergestellte, biologisch abbaubare, rein organische Materialien (Thermoplaste) wie Polylactide haben diesen Nachteil zwar nicht, aber sie sind über die Polymerisation nicht strukturierbar, so dass sie über Formprozesse in ihre endgültige Gestalt überführt werden müssen. Die bekannten ORMOCER®-Hybridmaterialien lassen sich sowohl über eine organische Polymerisation von C=C-Doppelbindungen als auch über anorganische Vernetzungsreaktionen (Si-O-Si-BrückenBildung) verfestigen, wobei das Vorhandensein von organisch polymerisierbaren C=C-Doppelbindung eine räumliche Strukturierung bei der Polymerisation ermöglicht. Allerdings sind die darin vorhandenen Si-C-Bindungen einer Hydrolyse unter physiologischen Bedingungen nicht zugänglich.

JP H08 199036 A offenbart eine Verbindung der Formel $(MeO)_3Si-O-(CH_2)_5-C(CO)O-(CH_2)_5-C(O)OCH_2CH_2OC(O)CH=CH_2$. WO 86/00084A offenbart die Verbindung Silicium-tetra(dicapryldiethoxyacrylat).

Die Erfinder der vorliegenden Erfindung haben sich die Aufgabe gestellt, die Nachteile des Standes der Technik zu überwinden und Materialien bereitzustellen, die einerseits einer engeren Vernetzung zugänglich sind als rein organische Materialien und daher mechanische Eigenschaften erreichen können, die bisher nicht einstellbar waren, andererseits jedoch unter physiologischen Bedingungen wesentlich besser (schneller und/oder weitgehender) abbaubar sein sollen als bisher bekannte Hybridmaterialien. Darüber hinaus sollen die erfindungsgemäßen Materialien sterilisierbar und biokompatibel sein, so dass sie sich für die Herstellung von Implantaten oder Scaffolds eignen.

Gelöst wird die Aufgabe durch die Bereitstellung von Silanen (auch Silan-Mischungen) und/oder Kieselsäurepolykondensaten, erhältlich durch Umsetzung mindestens eines hydrolysierbaren Silans der Formel (A)

$$SiR_4 \qquad (A)$$

worin R eine hydrolytisch kondensierbare Gruppe bedeutet und vorzugsweise ausgewählt ist unter Gruppen mit der Formel $R'COO^-$, stattdessen aber auch OR' oder OH sein kann, wobei R' geradkettiges, verzweigtes oder einen nichtaromatischen Ring aufweisendes Alkyl und vorzugsweise Methyl oder Ethyl bedeutet, mit
mindestens einer ein- oder mehrwertigen Verbindung $R^*(OH)_x$
mit x 1, 2, 3 oder größer 3, die in der Regel ausschließlich aus organischen Komponenten aufgebaut ist und ein geradkettiges oder verzweigtes, vorzugsweise ringfreies, je nach Anzahl der OH-Gruppen einbindiges, zweibindiges, dreibindiges oder mehrbindiges Kohlenwasserstoffgerüst R* mit einer kohlenwasserstoffhaltigen Kette variabler Länge besitzt, deren Kohlenstoffatome durch mindestens zwei, vorzugsweise mindestens drei -C(O)O-Gruppen (Estergruppen, in eine beliebige Richtung weisend) unterbrochen ist, mit der Maßgabe, dass die Verbindungen $(MeO)_3Si-O-(CH_2)_5-C(CO)O-(CH_2)_5-C(O)OCH_2CH_2OC(O)CH=CH_2$ und Silicium-tetra(dicapryldiethoxyacrylat) ausgeschlossen sind,
sowie - sofern Kieselsäurepolykondensate bereitgestellt werden sollen - gegebenenfalls einer nachfolgenden hydrolytischen Kondensationsreaktion.

Im Kohlenwasserstoffgerüst von R* folgen in den einzelnen, durch die Unterbrechungen gebildeten Kohlenwasserstoffeinheiten innerhalb der kohlenwasserstoffhaltigen Kette erfindungsgemäß maximal 8, vorzugsweise nicht mehr als 6 und stärker bevorzugt nicht mehr als vier Kohlenstoffatome aufeinander, wobei die Kette ihrerseits durch Sauerstoff- und/oder Schwefelatome unterbrochen sein kann, wie nachstehend erläutert. Außerdem weist das oder, im Falle verzweigter Strukturen, mindestens ein der einzigen Hydroxygruppe oder einer der Hydroxygruppen abgewandtes Ende der kohlenwasserstoffhaltigen Kette (und vorzugsweise jedes dieser Enden) eine organisch polymerisierbare Gruppe auf, in der Regel ausgewählt aus Gruppen, die eine organisch polymerisierbare C=C-Doppelbindung enthalten, wobei diese vorzugsweise Bestandteil einer Acryl- oder, stärker bevorzugt, Methacrylgruppe, insbesondere einer Acrylat- oder, stärker bevorzugt, Methacrylatgruppe ist, und ringöffnenden Systemen wie Epoxiden. Die organische Polymerisation, der diese Gruppen fähig sind, kann, muss aber nicht, eine Polyaddition sein; sie kann photochemisch, thermisch oder chemisch (2-Komponenten-Polymerisation, anerobe Polymerisation, redoxinduzierte Polymerisation) induzierbar sein. Die Kombination von Selbsthärtung mit z. B. photoinduzierter bzw. thermischer Härtung ist ebenfalls möglich. Es sei darauf hingewiesen, dass die -C(O)O-Gruppierung von Acrylat- oder Methacrylatgruppen den mindestens zwei -C(O)O-Gruppen (Estergruppen), durch die erfindungsgemäß die Kohlenstoffkette des Restes R* unterbrochen ist, vorzugsweise zuzurechnen ist.

Die Kohlenwasserstoffkette von R* kann wie erwähnt weiterhin durch Sauerstoffatome (Ethergruppen) oder Schwefelatome (Thioethergruppen) unterbrochen sein. Die zwischen den Ether-, Thioether- bzw. Estergruppen befindlichen Kohlenwasserstoffeinheiten sind vorzugsweise Alkyleneinheiten und können, müssen aber nicht, mit einem oder mehreren Substituenten substituiert sein, die vorzugsweise ausgewählt sind unter Hydroxy-, Carbonsäure-, Phosphat-, Phosphonsäure-, Phosphorsäureester- und (vorzugsweise primären oder sekundären) Amino- und Aminosäuregruppen.

Jede der OH-Gruppen der Verbindung $R^*(OH)_x$ kann eine Alkoholgruppe oder Bestandteil einer Carbonsäuregruppe sein. Verbindungen mit $x > 1$ können sowohl Alkoholgruppen als auch Carbonsäuregruppen enthalten, oder sie können Polyalkohole oder Polycarbonsäuren sein.

Die erfindungsgemäßen Silane/Silanmischungen bzw. Kieselsäurepolykondensate können aufgrund der vorhandenen organisch polymerisierbaren Gruppen organisch polymerisiert werden, so dass sie neben dem anorganischen, aus Si-O-Si-Einheiten aufgebauten dreidimensionalen Gerüst eine zusätzliche organische Vernetzungsstruktur bilden können.

In einer ersten spezifischen Ausgestaltung der Erfindung handelt es sich bei der Verbindung $R^*(OH)_x$ um einen einwertigen Alkohol oder eine einwertige Carbonsäure der Formel $R^{1'}OH$, worin $R^{1'}$ ein einbindiger Rest ist, der alle sonstigen oben für R* angegebenen Bedingungen erfüllen muss. Wird dieser mit einem Silan (A) umgesetzt, erhält man Silane der Formel (1)

$$R^1{}_aSiR_{4-a} \qquad (1)$$

worin $R^1$ den Rest $R^{1'}O$ bedeutet, der über das Sauerstoffatom der OH-Gruppe der Ausgangsverbindung $R^{1'}(OH)$ an das Siliciumatom gebunden ist. Erfindungsgemäß wird die Reaktion dabei so geführt, dass die Silane der Formel (1) mindestens einen, vorzugsweise mehrere (stärker bevorzugt durchschnittlich etwa zwei) Substituenten $R^1$ pro Siliciumatom aufweisen. Die kohlenwasserstoffhaltige Kette variabler Länge des Restes $R^1$ besitzt hinsichtlich der Anzahl der vorhandenen Estergruppen, der Länge der einzelnen Kohlenwasserstoffeinheiten und der organisch polymerisierbaren Gruppen die oben für R* angegebenen Merkmale. Der Index a in diesen Silanen ist ausgewählt unter 1, 2, 3 und 4, wobei die Silane der Formel (1) in der Regel als Gemische aus Silanen mit unterschiedlichen Bedeutungen des Index a vorliegen, wobei in diesem Fall die oben genannten ausgeschlossenen Silane enthalten sein können, und dieser Index im Gemisch häufig einen durchschnittlichen Wert von ca. 2 besitzt.

Die Silane der Formel (1) können über hydrolytische Kondensationsreaktionen in bekannter Weise in Kieselsäurepolykondensate überführt werden.

In einer zweiten spezifischen Ausgestaltung der Erfindung handelt es sich bei der Verbindung $R^*(OH)_x$ um eine zweiwertige Verbindung der Formel $R^{2'}(OH)_2$, worin $R^{2'}$ ein zweibindiger Rest ist, der im Übrigen alle oben für R* angegebenen Bedingungen erfüllen muss. Dabei kann es sich um einen Dialkohol, eine Dicarbonsäure oder eine Verbindung mit einer Carbonsäuregruppe und einer Alkoholgruppe handeln.

Bei der Umsetzung von Verbindungen $R^{2'}(OH)_2$ mit dem Silan (A) entstehen Gemische von Silanen, in denen die Reste der Verbindung $R^{2'}(OH)_2$ entweder (i) über zwei Sauerstoffatome an ein oder an zwei Siliciumatome gebunden sind (diese Reste sind nachstehend mit $R^2$ bezeichnet) oder (ii) über nur ein Sauerstoffatom an ein Siliciumatom gebunden sind, während die zweite OH-Gruppe frei bleibt (diese Reste sind nachstehend mit $R^{2''}(OH)$ bezeichnet) wobei die jeweiligen Anteile der einzelnen Komponenten bis zu einem gewissen Grad über die eingesetzten Mengenverhältnisse gesteuert werden können. Einzelne Bestandteile dieser Gemische können durch die nachstehenden Formeln dargestellt werden, die nicht in allen Fällen die genauen Strukturformeln darstellen, sondern teilweise als Summenformeln zu verstehen sind.

Es können sich z.B. monomere Silane der Formel (2)

$R^2SiR_2$ (2)

oder der Formel (3)

$R^2{}_2Si$ (3),

dimere Silane der Formel (4)

$R^2Si_2R_6$ (4)

oder der Formel (5)

$R^2RSi\text{-}O\text{-}SiRR^2$ (5)

oder ringförmige Oligosilane der Formel (6)

$[R^2SiR_2]_n$ (6)

oder kettenförmige Oligosilane der Formel (7)

$R_3Si[(R^2)_2SiR_2]_nSiR_3$ (7)

worin n eine nicht näher bestimmbare bzw. beeinflussbare Zahl ist, die in der Regel bei zwischen etwa 4 und 12, vorzugsweise bei etwa 8 liegt,
oder kettenförmige Oligosilane der Formel (8)

$R_2R^{2"}(OH)Si[(R^2)_2SiR_2]_nSiR^{2"}(OH)R_2$ (8)

mit n wie für Formel (6) und (7) angegeben,
oder kettenförmige Oligosilane der Formel (9)

$R_2R^{2"}(OH)SiR^2SiR^{2"}(OH)R_2$ (9)

oder längerkettige Verbindungen bilden.

Mit Ausnahme der Verbindung (4), (6), (7) und (8) und teilweise in der Verbindung (9) ist der Rest $R^2$ in all diesen Verbindungen über zwei Sauerstoffatome an nur ein Siliciumatom gebunden. Solche Strukturen bilden sich vorzugsweise dann, wenn die beiden Hydroxygruppen der Verbindung $R^{2'}(OH)_2$ an Kohlenstoffatomen gebunden sind, die vicinal oder in 1,3-Stellung zueinander liegen, so dass eine Anbindung über die Sauerstoffatome beider Hydroxygruppen an nur ein Siliciumatom (es bildet sich dann jeweils ein 5- oder 6-Ring) bevorzugt ist.

Es sei darauf hingewiesen, dass der Ausdruck "Silan" erfindungsgemäß nicht nur monomere Silane umfasst, sondern auch die vorgenannten Di- und Oligosilane.

Wird die Verbindung der Formel $R^2(OH)_2$ in einem großen molaren Überschuss, bezogen auf das Silan (A), eingesetzt, können sich gegebenenfalls auch Silane der Formel (10)

$[R^{2"}(OH)]_aSiR_{4-a}$ (10)

bilden, worin $R^{2"}$ die obige Bedeutung hat. Man erkennt, dass diese Silane den Silanen der Formel (1) vergleichbar sind mit der Änderung, dass der Rest $R^{2"}$ in den Strukturen (10) immer eine freie Hydroxygruppe trägt.

Erfindungsgemäß liegt das molare Verhältnis von Alkohol der Formel $R^2(OH)_2$ zu Silan (A) vorzugsweise bei etwa 2:1.

Es kann günstig sein, eine Mischung aus mindestens den Verbindungen der Formel $R^{1'}OH$ und der Formel $R^{2'}(OH)_2$ zu verwenden. Diese kann nämlich bei geeigneter Reaktionsführung der entsprechenden Ausgangsmaterialien ohne weiteres anfallen. Dies ist zum Beispiel dann der Fall, wenn über die Umsetzung eines Triols mit einer aktivierten Carbonsäure Alkohole der Formel $R^{1'}OH$ und der Formel $R^{2'}(OH)_2$ erzeugt werden wie weiter unten in den Beispielen gezeigt, wobei je nach eingesetzten Mengenverhältnissen Mischungen der Monoester und der Diester, gegebenenfalls auch in Mischung mit unumgesetztem Triol, anfallen können.

Die bei der genannten Umsetzung von Verbindungen $R^{2'}(OH)_2$ mit Silanen (A) erhaltenen Silane oder Silanmischungen können mit Ausnahme der Verbindung (3), in der das (einzige) Siliciumatom keine hydrolysierbare Gruppe R mehr aufweist, natürlich ebenfalls über hydrolytische Kondensationsreaktionen in bekannter Weise in Kieselsäurepolykondensate überführt werden. Sofern in der Mischung auch die Verbindung (3) vorhanden ist, kann diese bei einer nachfolgenden organischen Polymerisationsreaktion, wie sie nachstehend näher erläutert ist, jedoch über ihre organisch polymerisierbaren Gruppen in das entstehende organische Netzwerk eingebunden werden.

In weiteren Ausgestaltungen der Erfindung handelt es sich bei der Verbindung $R^*(OH)_x$ um eine mehrwertige Verbindung der Formel $R^{x'}(OH)_x$ mit x = 3 , 4 oder einer noch höheren Zahl, wobei der Rest $R^{x'}$ x Bindungen aufweist und im Übrigen alle oben für R* angegebenen Bedingungen erfüllt sein müssen. Aufgrund der sterischen Verhältnisse entstehen bei der Reaktion solcher Verbindungen bei x = 3 mit dem Silan (A) großenteils Silane, die den Silanen (2) bis (10) entsprechen, wobei anstelle der Reste $R^2$ bzw. $R^{2}$" Reste $R^3$ bzw. $R^{3}$" vorhanden sind, die im Vergleich zu den Resten $R^2$ und $R^{2}$" eine zusätzliche freie Hydroxygruppe aufweisen. Auch in diesen Ausgestaltungen wird das molare Verhältnis von Verbindung mit der Formel $R^{x'}(OH)_x$ zu Silan (A) vorzugsweise im Bereich von etwa 2:1 gewählt.

Nachstehend soll die Erfindung anhand einer Schemadarstellung eines erfindungsgemäßen Silans der Formel (1) näher erläutert werden. Gezeigt wird einer der Substituenten $R^1$ wie in Formel (1) gezeigt gebunden über ein Ether-Sauerstoffatom an das Siliciumatom. Dieses Sauerstoffatom ist Teil einer Polyethylenglycolgruppe mit n Ethylenglycoleinheiten und damit n Alkylengruppen mit je zwei Kohlenstoffatomen. Die letzte dieser Einheiten ist mit Ethylendicarbonsäure verestert, deren zweite Carbonsäureeinheit wiederum mit (hier gegebenenfalls mit einem beliebigen Substituenten R", der vor allem $CH_3$, COOH oder $CH_2OH$ sein kann, substituiertem) Ethylenglycol verestert ist, dessen zweite OH-Gruppe mit Methacrylsäure verestert wurde, wobei letztendlich eine Derivat von 4-[2-(Methacryloyloxy)ethoxy]4-oxobutansäure (MES) entstand. Damit ist die Gruppe (bis auf die ggf. durch R" verursachte Verzweigung) unverzweigt und besitzt an ihrem dem Siliciumatom abgewandten Ende eine Methacrylgruppe, die über ihre C=C-Doppelbindung organisch polymerisiert werden kann. Es sollte klar sein, dass der Substituent R" in dieser Schemadarstellung nur exemplarisch angeführt ist; selbstverständlich können derartige Substituenten (auch) an (anderen) beliebigen Stellen vorhanden sein. Außerdem sollte klar sein, dass eine Alternative zum unten dargestellten Silan ein Silan ist, in welchem n nicht wie dargestellt 3 oder 6, sondern 0 ist, das aber im Übrigen alle untenstehenden Komponenten aufweist. In einem solchen Silan mit n = 0 ist $R^1$ über ein Carboxylgruppen-Sauerstoffatom an das Siliciumatom gebunden.

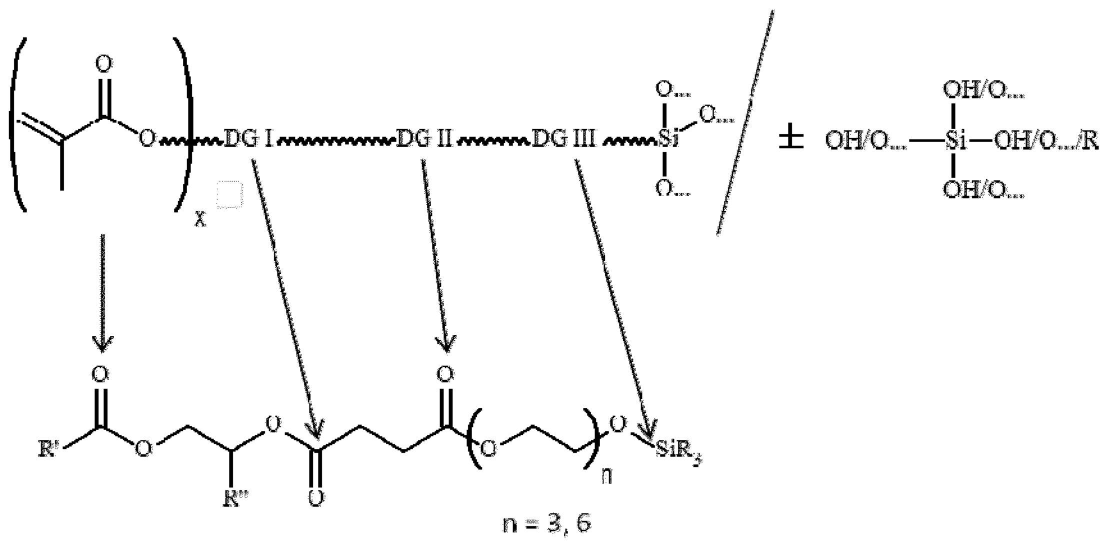

Die beiden in dieser Gruppe vorhandenen Carbonsäureestergruppen sind einer Hydrolyse zugänglich und hier mit DG I und DG II bezeichnet. Auch die Esterbindung zwischen der Methacrylsäure und dem gegebenenfalls mit R" substituierten Ethylenglycol ist hydrolytisch spaltbar. Die Spaltung an "DG III", der Si-O-Bindung, erfolgt unter Hydrolysebedingungen ebenfalls. Damit wird erstmals ein Material bereitgestellt, das auch an der Kopplungsstelle der organischen Gruppe zum Silicium degradierbar ist. Darüber hinaus können Polyethergruppen, wie z.B. von E. M. Christenson et al. in Wiley InterScience am 2. Juni 2004 unter DOI: 10.1002/ jbm.a.30067 angesprochen, in manchen Konstellationen *in vivo* oxidativ gespalten werden.

Man erkennt aus den obigen Erläuterungen unmittelbar, dass das Vorsehen von nur kurzen, durch Estergruppen (-C(O)O-) und gegebenenfalls Sauerstoffatome und/oder Schwefelatome unterbrochenen Kohlenwasserstoffketten beim hydrolytischen Abbau großenteils zu kleinmolekularen Produkten führt, die in der Regel als solche physiologisch unbedenklich sind. Im obigen Beispiel entstehen z.B. Bernsteinsäure und ein vernetztes Polymethacryl-Bruchstück, das aufgrund seiner Vernetzung ebenfalls toxikologisch unbedenklich ist. Letzteres dürfte je nach den Vernetzungsbedingungen in der Regel auch relativ kleinmolekular ausfallen, da die Silan-Moleküle aufgrund der vorhergehenden hydrolytischen Kondensation schon relativ starr zueinander ausgerichtet sind, weshalb eine übergeordnete Vernetzung einer ununterbrochenen Vielzahl von Methacrylatgruppen eher unwahrscheinlich ist. Werden Materialen eingesetzt, die zusätzliche OH- oder COOH-Substituenten o.ä. an den jeweiligen Kohlenwasserstoffketten aufweisen, entstehen unter Umständen Moleküle, die im menschlichen Körper als Zwischenprodukte auftreten wie Milchsäure oder Citronensäure, so dass sie in dessen Metabolismus eingeschleust werden könnten. Die verbleibenden, im Wesentlichen anorganischen Reste dürften im Wesentlichen Bruchstücke mit Si-O-Si-Verknüpfungen sein, die nach außen hin mit Hydroxygruppen belegt sind.

Durch Hydrolyse und Kondensation des oben gezeigten Silans (hier der Formel (1) mit R = OAc, d.h. $CH_3C(O)O$) entsteht ein Harz (ein organisch modifiziertes Kieselsäurepolykondensat), das nachstehend als "GM-Harz" bezeichnet wird:

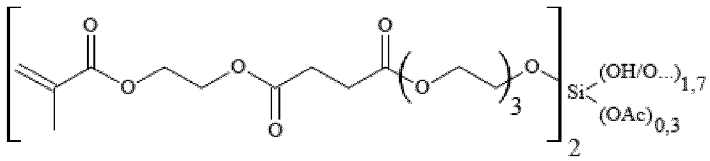

**GM-Harz**

Die Substitution des Siliciums mit zwei der in Rede stehenden organischen Substituenten $R^1$ ist ein Durchschnittswert; das Ausgangs-"Silan" für das Harz besteht in der Regel aus einem Gemisch verschiedener Silane, in denen teils keine, teils eine, zwei, drei oder vier dieser organischen Gruppen an ein Siliciumatom gebunden sind, wobei im Mittel zwei der organischen Gruppen pro Siliciumatom vorhanden sind. Die Anzahl der OAc- (Acetyl-)Gruppen am Silicium ist ebenfalls ein statistischer Wert (die Acetylgruppen stammen im beispielhaften Fall aus dem Ausgangsmaterial, Siliciumtetraacetat, und bleiben auch unter hydrolytischen Bedingungen in etwa dem angegebenen Anteil erhalten). Die Hydroxygruppen, die durch Hydrolyse von OAc-Gruppen entstanden sind, werden unter den Bedingungen der hydrolytischen Kondensation in Si-O-Si-Brücken umgewandelt.

Das oben als GM-Harz bezeichnete Harz sowie weitere Harze wurden organisch polymerisiert und in diesem Zustand auf ihre mechanischen Eigenschaften hin untersucht. Dabei ergibt sich, dass die Länge des erfindungsgemäßen Substituenten $R^1$ einen Einfluss auf die Zugdehnung (Tensile Strength) und den E-Modul (Young's Modulus) hat: Je länger der Substituent ist, desto weicher wird das Material.

Dies erkennt man bei einem Vergleich des polymerisierten GM-Harzes (nachstehend als "Poly-GM" bezeichnet) mit dem Polymerisationsprodukt eines ebenfalls erfindungsgemäßen Harzes, das sich von diesem nur dadurch unterscheidet, dass sechs anstelle von drei EthylenglycolEinheiten in der Gruppe vorhanden sind:

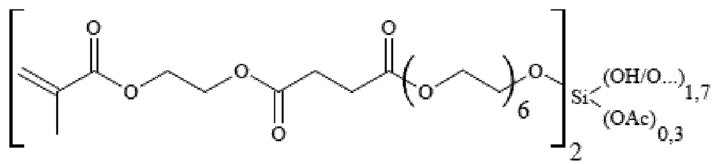

**SV I-Harz**

Dieses Harz wird als SV I-Harz, dessen Polymerisationsprodukt als Poly-SV I bezeichnet. Über die Anzahl der organisch polymerisierbaren C=C-Doppelbindungen pro Substituent $R^1$ können die mechanischen Eigenschaften ebenfalls stark beeinflusst werden: Ist dieser Substituent verzweigt und enthalten die beiden Verzweigungs-Enden jeweils eine organisch polymerisierbare C=C-Doppelbindung, steigen die Werte für die Zugdehnung und den E-Modul um mehr als eine Zehnerpotenz. Dies lässt sich aus einem Vergleich der Werte für Poly-GM und Poly-SV I mit dem Polymerisationsprodukt eines weiteren erfindungsgemäßen Harzes der nachstehenden Zusammensetzung zeigen.

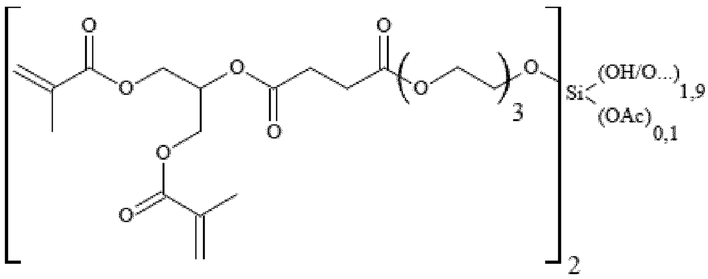

SV II-Harz

Dieses Harz wird als SV II-Harz bezeichnet, dessen Polymerisationsprodukt als Poly-SV II.

Eine ebenfalls signifikante Steigerung der Festigkeit ergibt sich durch eine Erhöhung des Anteils an anorganischen Vernetzungsgruppen: Wird das für das GM-Harz eingesetzte Silan nicht als solches einer hydrolytischen Kondensation unterworfen, sondern zusammen mit einem weiteren Silan mit vielen (z.B. zwei bis drei) hydrolytisch kondensierbaren Resten und im Übrigen nur kurzen organischen Substituenten, z.B. mit einem partiell hydrolysierten/kondensierten Ethyltriacetoxysilan oder einem partiell hydrolysierten/kondensierten Tetraethoxysilan, wobei z.B. das untenstehende, mit SV III-Harz bezeichnete Material entsteht,

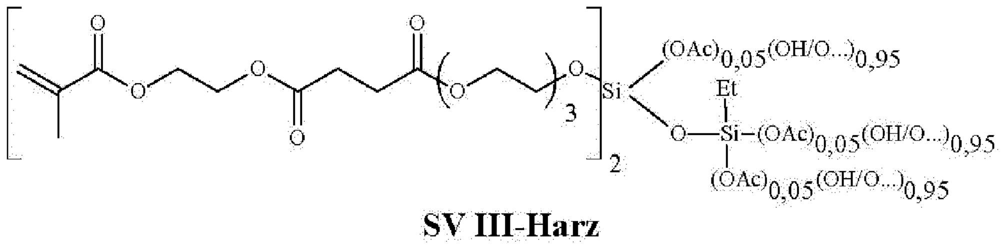

SV III-Harz

steigen die mechanischen Werte des polymerisierten Materials (bezeichnet als "Poly SV III) auf das ca. Dreifache im Vergleich zum reinen, polymerisierten Poly-GM.

Darüber hinaus lassen sich die mechanischen Eigenschaften auch noch in einem gewissen Ausmaß über den Kondensationsgrad der Harze beeinflussen: Je stärker die Kondensation erfolgt, d.h. je mehr Si-O-Si-Brücken vorhanden sind, desto härter wird das Produkt.

Die für die voranstehend beschriebenen Materialien gemessenen Werte sind der nachstehenden Tabelle 1 zu entnehmen, wo sie mit den entsprechenden Werten von natürlichem Gewebe ins Verhältnis gesetzt sind.

Tabelle 1

| **Synthetisierte Materialien** | **Zugfestigkeit [MPa]** | **Natürliches Gewebe** | **Zugfestigkeit [MPa]** |
|---|---|---|---|
| Poly-GM | 4,3 ± 0,2 | Blase | 0,27 ± 0,14 |
| Poly-SV I | 1,8 ± 0,2 | Blutgefäß | 1,4 - 11,1 |
| Poly-SV II | 30,3 ± 3,1 | Aorta | 1,72 ± 0,89 |
| Poly-SV III | 12,5 ± 0,6 | Knorpel | ~5 |
| **Synthetisierte Materialien** | **E-Modul [MPa]** | **Natürliches Gewebe** | **E-Modul [MPa]** |
| Poly-GM | 43,5 ± 2,6 | Weiches Gewebe | 0,4 - 350 |
| Poly-SV I | 18,9 ± 1,1 | | |
| Poly-SV II | 615 ± 116 | Hartes Gewebe | 10 - 1500 |
| Poly-SV III | 109 ± 11,1 | | |

Man erkennt, dass sich mit den erfindungsgemäßen Materialien eine spezifisch gesuchte Anpassung der mechanischen Werte an bestimmte Gewebe bewirken lässt. Da sich sowohl die anorganische als auch die organische Vernetzungsdichte einstellen lässt, kann der Fachmann durch geeignete Wahl innerhalb der Parameter, die die Erfindung beschreibt, genau die gewünschten Werte erzielen.

Die organisch polymerisierbaren Gruppen (z.B. die C=C-Doppelbindungen) sind ggf. in der Masse des Harzes, vor allem aber auch an strukturell gewünschten Punkten in einem Bad aus dem Harzmaterial polymerisierbar. So kann das kondensierte Harz als Masse (flüssig oder pastös) vorgelegt und z.B. mit 2-Photonen-Polymerisation ("TPA processing") in einer gewünschten Form oder einem gewünschten Muster polymerisiert werden. Hierfür wird vorzugsweise mit Laserlicht in bekannter Weise eine Belichtung durchgeführt, wie beispielsweise in WO 2011/098460 A1 beschrieben. Statt dessen kann natürlich auch eine Strukturierung mit anderen Techniken erfolgen, beispielsweise durch das sog. Rapid Prototyping, bei dem die gewünschte Form durch sequentielles Belichten einer oberflächlichen Badschicht mit anschließendem Absenken der verfestigten Schicht erzeugt wird.

Beim Bestrahlen werden im Wesentlichen alle organischen C=C-Doppelbindungen umgesetzt, und zwar unabhängig davon, ob die Bestrahlung strukturiert oder über das gesamte Material hinweg erfolgt. Dies kann sich anhand des in Fig. 1 dargestellten μ-Raman-Spektrums nachweisen lassen (dunkler Graph: das kondensierte GM-Harz vor der Polymerisation, versetzt mit 1% Photoinitiator. Die beiden fast übereinanderliegenden, hellen Graphen zeigen das bestrahlte Harz, einmal vor und einmal nach einer zusätzlichen Bestrahlung mit γ-Strahlen. Auf der Abszisse sind die Wellenzahlen [$cm^{-1}$] aufgetragen, auf der Ordinate die Intensität in relativen Einheiten, (arbitrary units, "a.u.")). Das bestrahlte Harz wurde deshalb einmal vor und einmal nach einer zusätzlichen Bestrahlung mit γ-Strahlen untersucht, weil gamma-Bestrahlung die einfachste und am häufigsten angewendete Technik der Sterilisation im Medizinsektor ist - die Tauglichkeit auch hinsichtlich dieses Aspekts ist ein weiterer Vorteil der Erfindung. Der hohe Umwandlungsgrad der organisch polymerisierbaren Gruppen trägt zur guten Biokompatibilität bei, denn Methacrylat-Monomere, die beim Abbau von unpolymerisierten Strukturen wiederum entstehen würden, sind in der Regel relativ toxische Moleküle, weshalb es hochgradig wünschenswert ist, ihre Bildung beim Abbau zu unterdrücken.

Das nicht polymerisierte Material kann anschließend weggewaschen werden. Eine dreidimensionale Struktur, die auf diese Weise hergestellt wurde, ist in Figur 6 dargestellt. Aufgrund dieser Strukturierbarkeit sind die erfindungsgemäßen Materialien zur Herstellung filigraner Objekte, wie es Scaffolds sind, gut geeignet. Die Widerstandsfähigkeit gegenüber Gamma-Strahlung macht die Objekte darüber hinaus sterilisierfähig.

Die Quervernetzung in den Materialien kann noch modifiziert/verstärkt werden. Diese spezielle Form der Nachhärtung nutzt nicht (oder nicht nur) die Polymerisationsreaktion (Polyaddition) der organisch polymerisierbaren Gruppen als solcher wie oben erläutert. Sofern es sich bei den organisch polymerisierbaren Gruppen um C=C-Doppelbindungen oder ringöffnende Systeme wie Epoxide handelt, ist nämlich auch eine Umsetzung der diese Doppelbindungen enthaltenden Kieselsäurepolykondensate mit Di- oder höheren Aminen oder Di- oder höheren Thiolen über eine Michael-Addition (Thiol-En-Umsetzung bzw. die analoge Umsetzung mit Aminen) möglich. Dies gelingt mit Di-, Tri, Tetra- oder sogar noch höher funktionalisierten Aminen oder Mercaptanen (Thiolen), wobei die Reaktion mit Aminen im Falle von C=C-Doppelbindungen als organisch polymerisierbaren Gruppen (nur) dann möglich ist, wenn diese in aktivierter Form vorliegen, beispielsweise als Acryl- oder Methacrylgruppen (darunter (Meth)acrylatgruppen). Die Polymerisation der restlichen C=C-Doppelbindungen bzw. ringöffnenden Systeme wie Epoxygruppen wird anschließend wie zuvor beschrieben durchgeführt.

Es versteht sich von selbst, dass in dieser Ausgestaltung der Zusatz an Thiol- oder Aminverbindung im molaren Unterschuss von SH- bzw. Aminogruppen zu den organisch polymerisierbaren Gruppen zu erfolgen hat, damit auch nach der Michael-Addition organisch polymerisierbare Gruppen verbleiben, die der organischen Polymerisationsreaktion unterworfen werden können.

In einer alternativen Ausgestaltung der Vernetzungsreaktion kann die Vernetzung durch die genannten, mehrfach funktionellen Mercaptane bzw. Amine vollständig an die Stelle der Polymerisationsreaktion der organisch polymerisierbaren Gruppen treten. In diesem Fall werden die Thiole oder Amine mindestens in einer solchen Menge zugesetzt, dass eine Mercapto- oder Aminogruppe pro organisch polymerisierbarer Gruppe zur Verfügung steht, so dass alle diese Gruppen über die Vernetzungsreaktion mit den Thiolen bzw. Aminen abreagieren.

Beispiele für polyfunktionelle, zur Verbrückung sowohl über die Ringöffnung von reaktiven cyclischen Ethern als auch über die Umsetzung mit C=C-Doppelbindungen einsetzbare Verbindungen sind die folgenden:

Als Beispiele für multifunktionellen Thiole seien genannt: Trimethylolpropantri-(3-mercaptopropionat) (TMPMP); Trimethylolpropan-trimercaptoacetat) (TMPMA); Pentaerytritoltetra(3-mercaptopropionat) (PETMP); Pentaerytritoltetramercaptoacetat) (PETMA); Glykoldimercaptoacetat; Glykoldi(3-mercapto-propionat); Ethoxyliertes Trimethylolpropantri(3-mercaptopropionat); Biphenyl-4-4'-dithiol; p-Terphenyl-4,4''-dithiol; 4,4'-Thiobisbezenthiol; 4,4'-Dimercaptostilben; Benzen-1,3-dithiol; Benzen-1,2-dithiol; Benzen-1,4-dithiol; 1,2-Benzendimethanthiol; 1,3-Benzendimethanthiol; 1,4-Benzendimethanthiol; 2,2'-(Ethylendioxy)diethanthiol; 1,6-Hexandithiol; 1,8-Octandi-thiol; 1,9-Nonandithiol,

Dipentaerythritolhexa(3-mercaptopropionat) (DiPETMP, im Handel erhältlich als THIOCURE®)

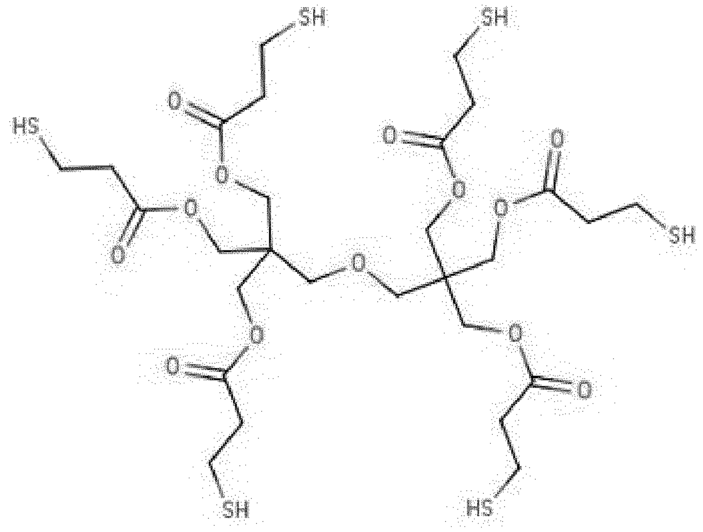

Tris[2-(3-mercaptopropionyloxy)ethyl]isocyanurat (im Handel erhältlich als THIOCURE® TEMPIC)

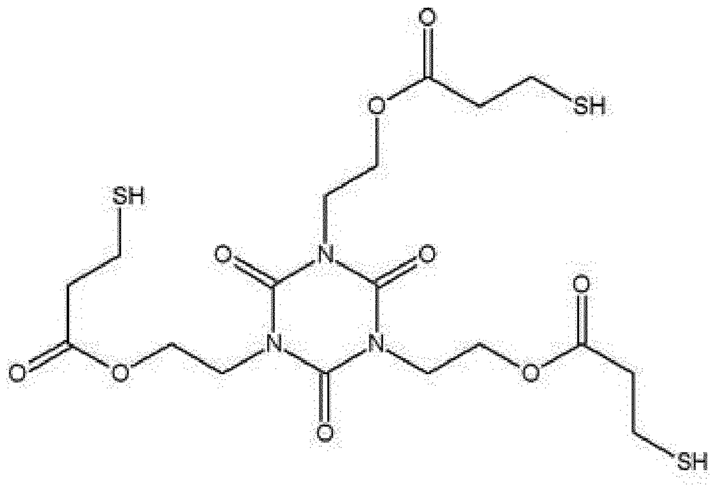

Ethoxyliertes Trimethylolpropan-tri-3-mercaptopropionat (im Handel erhältlich als THIOCURE® ETTMP 700)

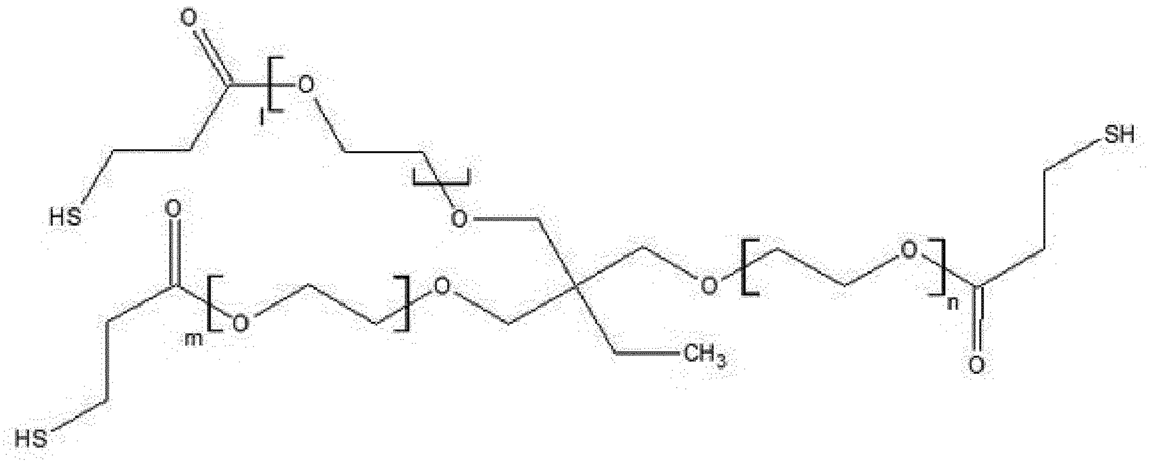

Glycerin-1,3-dithioglykolat bzw. Glycerin-1,2-dithioglykolat

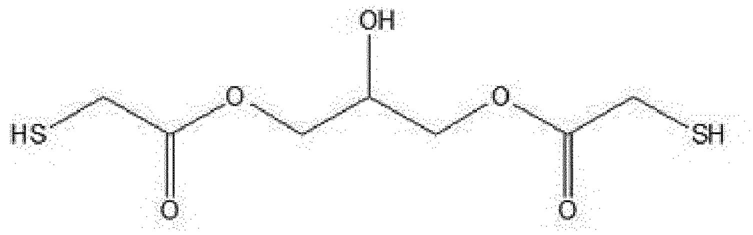

Bei den Aminen handelt es sich in der Regel um primäre Amine, weil diese eine höhere Reaktivität zeigen. Doch sind auch sekundäre Amine von der Erfindung umfasst. Als Beispiele für multifunktionelle Amine seien genannt: Diaminoaceton, Diaminoacridin, Diaminoadamantan, Diaminoanthrachinon, Benzidin, Diaminobenzoesäure, Phenylendiamin, Diaminobenzophenon, Diaminobutan, Diaminocyclohexan, Diaminodecan, Diaminodicyclohexylmethan, Diaminomethoxybiphenyl, Diaminodimethylhexan, Diaminodiphenylmethan, Diaminododecan, Diaminoheptan, Diaminomesitylen, Diaminomethylpentan, Diaminomethylpropan, Naphtyhlendiamin, Diaminoneopentan, Diaminooctan, Diaminopentan, Diaminophenanthren, Diaminopropan, Diaminopropanol, Diaminopurin, Diaminopyrimidin. Sollen sekundäre Amine eingesetzt werden, so enthalten diese anstelle der Gruppe $NH_2$ (z.B. in den oben genannten Verbindungen) eine Gruppe NHR*, worin R* in der Regel für eine meist kürzerkettige (z.B. $C_1$-$C_8$, vorzugsweise $C_1$-$C_4$) Alkylgruppe oder eine optional substituierte Aryl- (z.B. Phenyl-) oder Alkylarylgruppe steht.

In der Regel wird die Thiol-Addition in Gegenwart eines Initiators durchgeführt, wie aus dem Stand der Technik bekannt, während die Amin-Addition auch ohne Initiator möglich ist.

Tritt die Vernetzung an die Stelle der Polymerisationsreaktion, bildet sich dabei ein etwas lockereres organisches Netzwerk, weil S-(Kohlenwasserstoff)-S-Brücken bzw. N-(Kohlenwasserstoff)-N-Brücken ausgebildet werden.

Wenn die für die Michael-Addition verwendeten Thiole und/oder Amine selbst ein degradierbares Gerüst aufweisen, beispielsweise ein solches mit Ester- und/oder Etherbrücken, wie es bei den voranstehend mit ihren Formeln dargestellten Thiolen der Fall ist, kann diese zusätzliche Quervernetzung zu einer erhöhten mechanischen Stabilität oder sonstigen mechanischen Modifizierungen der Endprodukte führen, ohne dass hierbei der abbaubare Anteil der Systeme und damit die Degradierbarkeit reduziert würden. Dementsprechend können die mechanischen Eigenschaften (z.B. der E-Modul) über den Zusatz von quervernetzenden Thiolen und/oder Aminen sehr fein und gezielt eingestellt werden. Die Degradierbarkeit der organischen Polymerstruktur kann durch die Thiol- bzw. Aminzugabe sogar noch gesteigert werden, wie sich aus den nachfolgenden Beispielen ergibt.

Ebenfalls eine Modifizierung des Vernetzungsgrades kann durch das Zusetzen oder Vorhandensein von Co-Monomeren bewirkt werden, sofern diese Co-Monomeren mindestens zwei copolymerisierbare Gruppen, beispielsweise C=C-Doppelbindungen oder ringöffnende Systeme wie Epoxygruppen, aufweisen. Die Copolymerisation mit solchen Monomeren kann alternativ oder zusätzlich zur Michael-Addition erfolgen. Bei der organischen Polymerisation des Harzes werden die Co-Monomere einpolymerisiert. Das Produkt enthält dann einen relativ geringeren Anteil an Si-O-Netzwerk, bezogen auf die organischen Netzwerk-Strukturen.

In einer besonders günstigen Variante der Erfindung wird ausgenutzt, dass bei der Gewinnung von hydroxygruppenhaltigen organischen Resten, die mit einer Siliciumverbindung zu den erfindungsgemäßen Silanen umgesetzt werden können, Polyalkylenglycole eingesetzt werden können. Diese werden z.B. mit einer aktivierten Carbonsäure wie einem die organisch polymerisierbare Gruppe (z.B. ein (Meth-)acrylat) enthaltenden Säurechlorid einseitig zu einem Glycolmonoester umgesetzt, wobei als Nebenprodukt der entsprechende Diester entstehen kann. Wird dieser nicht entfernt, bleibt er bei der Umsetzung mit der Siliciumverbindung in der Reaktionsmischung und wird bei der Härtung des Harzes mit einpolymerisiert.

In Hinblick auf die Verwendung der erfindungsgemäßen Materialien für Scaffolds und das damit verbundene Erfordernis einer biologischen Abbaubarkeit unter physiologischen Bedingungen wurde das Abbauverhalten erfindungsgemäßer, bereits organisch vernetzter Materialien untersucht. Im Körper kann der pH-Wert zwischen 1 und 9 variieren, je nachdem welche Region betrachtet wird. Daher ist eine Untersuchung in verschiedenen pH-Bereichen sinnvoll.

Die organisch polymerisierten Materialien wurden in verschiedenen Puffern mit pH-Werten zwischen 4,65 (Acetatpuffer) und 9,6 (Carbonat-Bicarbonat-Puffer) gelagert. Die Figuren 2 bis 5 zeigen in der Ordinate den Gewichtsverlust in [%], in der Abszisse die Lagerzeit in Wochen. Es zeigte sich, dass der pH-Wert des umgebenden Mediums einen starken Einfluss auf die Abbaugeschwindigkeit hat. Bei den Polymeren Poly-GM, Poly-SV I und Poly-SV III trat der stärkste Massenverlust in einem Carbonat-Bicarbonat-Puffer auf (ca. 40 - 60% nach ca. 16 Wochen); deutlich geringer war er nach dieser Zeit in vollentsalztem Wasser (pH 6,5-7,0 bei 20°C) (ca. 10 - 20%), phosphatgepufferter Saline ("PBS", pH 7,4) und in Acetatpuffer mit einem pH-Wert von 4,65 bei 20°C (letztere jeweils ca. 5-10%). Poly-SV III wird dagegen auch im leicht Alkalischen nur relativ langsam abgebaut, während der Abbau im Sauren vergleichbar mit den Abbauraten der anderen Polymere ist.

Anhand der vier untersuchten Beispiele von Harzen ohne Thiolzusatz lässt sich zeigen, dass über den gewählten

Zeitraum von vier Monaten ein Masseverlust bei allen organisch vernetzten Hybridpolymeren auftrat, wobei die Degradationsgeschwindigkeit von den strukturellen Unterschieden in den Polymeren stark beeinflusst war. Dabei lässt sich erkennen, dass die Degradation nicht nur über den pH-Wert des Mediums, sondern auch über Variationen im strukturellen Aufbau der Hybridpolymere beeinflusst wird. Je mehr hydrophile Gruppen (wie z. B. Ethylenglykoleinheiten) enthalten sind, umso schneller erfolgt der Abbau. Dagegen verlangsamen eine größere organische (Quer-)Vernetzung bzw. ein höherer anorganischer Anteil und ein höherer Kondensationsgrad (eine höhere anorganische Vernetzung) die Hydrolyserate. Diese Erkenntnisse können genutzt werden, um für spezifische Anwendungen maßgeschneiderte Materialien auszuwählen.

Bemerkenswert ist weiterhin, dass die gemessenen Abbauraten über die Zeit hinweg im Wesentlichen konstant waren. Auch wenn die Werte zeigen, dass der Abbau nicht schnell verläuft, ist er doch signifikant, da ein biologischer Abbau meist erst im Rahmen eines relativ langen Zeitraum wirksam werden darf: Erst müssen die Verletzungen verheilt sein bzw. die Zellen angewachsen sein und sich vermehrt haben, bevor die mechanische Stütze (Implantat, Scaffold) durch Abbau verschwinden darf.

Die Abbauuntersuchungen des Polymers aus einem mit einer Polythiolverbindung versetztem Harz erfolgten in Carbonatpufferlösung bei 37°C. Die Massenverluste lagen nach einer Woche bei ca. 34%, nach 4 Wochen bei ca. 74% und nach 16 Wochen bei ca. 84%. Das zeigt, dass der Zusatz einer mindestens difunktionellen Verbindung zum Harz, die eine Thiol-en-Additionsreaktion oder sonstige Michael-Additionsreaktion bewirkt, die Abbaugeschwindigkeit drastisch erhöhen kann.

Der Anteil an organisch vernetzbaren Gruppen kann in den erfindungsgemäßen Materialien in einem breiten Bereich eingestellt werden. Wenn die organische Vernetzung relativ gering ist, ist zu erwarten, dass bei der Degradation der Hybridpolymere auch solche Strukturen, die sich ansonsten nicht zersetzen lassen, z.B. Polymethacrylatstrukturen mit relativ geringem Molekulargewicht, aus dem Polymerverbund gelöst und von z. B. Macrophagen aufgenommen und durch Verdauung zersetzt werden können. Stark organisch dominierte und vernetzte Polymerstrukturen, erhalten durch den Zusatz von organischen, in das Netzwerk einpolymerisierbaren, mindestens difunktionellen und damit brückenbildenden Monomeren zu den Harzen, sind sogar direkt und relativ schnell degradierbar.

Es konnte auch gezeigt werden, dass Upcyte-Endothelzellen gut an organisch polymerisiertem Poly-GM und weiteren erfindungsgemäßen Materialien haften und ihre charakteristische Morphologie dabei nicht verlieren. Über Immunfärbung (mit Anti-Tubulin β und DAPI) konnte auch der Nachweis für Zellteilungen von an diesem Material haftenden Zellen geführt werden.

Mit der vorliegenden Erfindung wird demnach eine neue Klasse von organisch-anorganischen Hybridpolymeren bereitgestellt, die biodegradierbar und biokompatibel sind, deren mechanische Eigenschaften an diejenigen von bestimmten Geweben angepasst werden können und die sich mittels Zwei-Photonen-Polymerisation (2-PP) oder auf anderem Wege in der Masse oder strukturiert organisch polymerisieren lassen und dabei einen hohen Umwandlungsgrad der organisch polymerisierbaren Gruppen zeigen.

Die Biodegradierbarkeit, bestimmt über den Massenverlust, ist vom pH-Wert der Umgebung abhängig. Außerdem kann sie über Modifikationen der Polymerstruktur beeinflusst werden.

Die mechanischen Eigenschaften können innerhalb eines bestimmten Bereichs eingestellt und damit an diejenigen nativer Gewebe angepasst werden. Die Einstellung erfolgt maßgeblich über die Variation des Gehalts an organisch polymerisierbaren Gruppen, die Länge der in Rede stehenden Gruppe und des anorganischen Gehalts.

Insbesondere durch die 2-PP-Polymerisation lassen sich dreidimensionale, feinstrukturierte Objekte herstellen, so dass die Erfindung auch für die Erzeugung von Scaffolds geeignet ist.

Lichtinduzierte Polymerisation führt zu Hybridpolymeren mit hohem Umwandlungsgrad der C=C-Gruppen und damit Abbauprodukten, die im Wesentlichen frei sind von toxisch relevanten Komponenten. Eine Bestrahlung mit Gamma-Strahlen kann für Sterilisationszwecke genutzt werden, da eine derartige Bestrahlung das bereits polymerisierte Material nicht nachteilig beeinflusst.

Der Einsatz der erfindungsgemäßen Materialien erstreckt sich allerdings nicht nur auf die oben genannten Verwendungsmöglichkeiten. Sie lassen sich ganz allgemein für die verschiedensten Zwecke nutzen, beispielsweise in Form von Bulkmaterialien, Fasern, Kompositen, Zementen, Klebstoffen, Vergussmassen, Beschichtungsmaterialien, für den Einsatz im (Reaktions)extruder und im Bereich der Mehrphotonenpolymerisation. Besonders bedeutsam ist ein Einsatz für medizinische Anwendungen (z. B. als Implantat, Knochenersatzmaterial, Knochenzement).

Die nachstehenden Beispiele erläutern die Herstellung der einzelnen, oben aufgeführten Materialien.

**Synthese von 4-[2-(Methacryloyloxy)ethoxy]-4-oxo-butansäurechlorid (MES-Cl)**

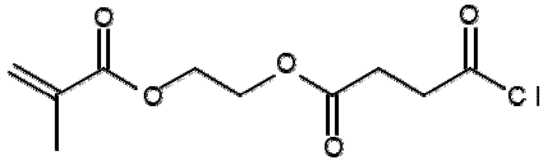

MES-Cl

Die Synthese von 4-[2-(Methacryloyloxy)ethoxy]-4-oxo-butansäurechlorid (MES-Cl) wurde in geringfügiger Abwandlung (umgekehrte Zugabereihenfolge und geringerer Überschuss an Thionylchlorid) nach T. E. Kristensen et al., Org. Lett. 2009, 11, 2968 durchgeführt: 69,83 g (303,3 mmol, 1,0 Äquiv.) 4-[2-(Methacryloyloxy) ethoxy]-4-oxo-butansäure (MES) wurden unter Stickstoffatmosphäre, Rühren und Rückfluss mit 72,62 g (610,4 mmol, 2,0 Äquiv.) Thionylchlorid versetzt. Die klare farblose Lösung wurde für 30 min bei 30°C und 1 h bei 50°C gerührt. Daraufhin wurden das überschüssige Thionylchlorid sowie die flüchtigen Bestandteile unter vermindertem Druck bzw. im Ölpumpenvakuum entfernt.
Ausbeute: 75,88 g (305,2 mmol, 100%)
$M_{ber.}$ ($C_{10}H_{13}ClO_5$) = 248,66 g/mol
*$^1$H-NMR* (400,1 MHz, $CDCl_3$):
$\delta$ [ppm] = 1,95 (s, 3 H, $C\underline{H}_3$), 2,70 - 2,73 (t, 2 H, $C\underline{H}_2CH_2C(O)Cl$, $^3J_{HH}$ = 6,52 Hz), 3,22 - 3,25 (t, 2 H, $CH_2C\underline{H}_2C(O)Cl$, $^3J_{HH}$ = 6,53 Hz), 4,35 - 4,40 (m, 4 H, $OC\underline{H}_2C\underline{H}_2O$), 5,61 - 5,62 (m, 1 H, $\underline{H}_2C$=, cis), 6,13 (s, 1 H, $\underline{H}_2C$=, trans).
*$^{13}$C-NMR* (100,6 MHz, $CDCl_3$):
$\delta$ [ppm] = 18,26 ($\underline{C}H_3$), 29,24 ($\underline{C}H_2CH_2C(O)Cl$), 41,69 ($CH_2\underline{C}H_2C(O)Cl$), 62,19 u. 62,85 ($O\underline{C}H_2\underline{C}H_2O$), 126,23 ($H_2\underline{C}$=), 135,84 (=$\underline{C}(CH_3)C(O)OR$), 167,09 (=$C(CH_3)\underline{C}(O)OR$), 170,67 ($\underline{C}(O)OR$) u. 172,96 ($\underline{C}(O)Cl$).
*FT-IR:* $\tilde{\nu}$[cm$^{-1}$] = 2961 (m, ν(CH)), 1794 (vs, RCOCl ν(C=O)), 1721 (vs, ν(C=O)), 1637 (m, ν(C=C)), 712 (m, ν(C-Cl)).
*μ-Raman:* $\tilde{\nu}$[cm$^{-1}$] = 2955 u. 2928 (vs, ν(CH)), 1793 (w, RCOCl ν C=O)), 1714 (s, ν (C=O)), 1639 (s, ν C=C)), 707 (m, ν (C-Cl)), 434 (s, ν C-Cl)).

**Synthese von 4-[2-(Methacryloyloxy)ethoxy]-4-oxo-butansäure-triethylenglykolester (MES-TEG)**

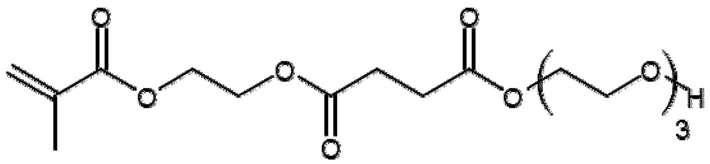

MES-TEG

Als Orientierung für die Synthese von 4-[2-(Methacryloyloxy)ethoxy]-4-oxo-butansäuretriethylenglykolester (MES-TEG) diente eine Vorschrift von Wiseman et al., J. Am. Chem. Soc. 2005, 127, 5540: Unter Stickstoffatmosphäre wurden 47,99 g (319,6 mmol, 3,2 Äquiv.) Triethylenglykol (TEG) in 100 ml Dichlormethan gelöst und mit 9,17 g (115,6 mmol, 1,1 Äquiv.) Pyridin versetzt. Zu der eisgekühlten farblosen Lösung wurden unter Rühren 24,81 g (99,8 mmol, 1,0 Äquiv.) MES-Cl gegeben. Die Mischung wurde 24 h bei 30°C gerührt und danach mit 800 ml kaltem Ethylacetat versetzt, woraufhin Pyridinhydrochlorid als weißer Niederschlag ausfiel, welcher bei der anschließenden Extraktion entfernt wurde. Die organische Phase wurde durch dreimaliges Waschen mit je 200 ml kaltem Wasser gereinigt und über Natriumsulfat getrocknet. Das Lösemittel wurde destillativ entfernt, das Produkt 3 h im Ölpumpenvakuum von flüchtigen Bestandteilen befreit und zur Stabilisierung mit 0,2 Gew.-% Hydrochinonmethylether (HQME) versetzt. Unlösliche Bestandteile wurden durch Filtration über einen Spritzenfilter mit 5 μm-Porengröße entfernt. Das Produkt wurde bis zur weiteren Verwendung unter Rühren in einer PE-Flasche gelagert.
Roh-Ausbeute: 37,34 g

Bei der Roh-Ausbeute ist der Anteil an disubstituiertem Triethylenglykol ($MES_2TEG$), der bei der Synthese als Nebenprodukt entsteht, wenn beide OH-Gruppen verestert werden, noch nicht berücksichtigt. Dieser Anteil wurde mit Hilfe des $^1$H-NMR-Sepektrums ermittelt. Dazu wurde das Signal bei ≈ 3,60 ppm, welches der $CH_2$-Gruppe in direkter Nachbarschaft zur Alkohlfunktionalität in MES-TEG entspricht und allein durch das Hauptprodukt erzeugt wird, als Referenz definiert. Aus dem Verhältnis des Integrals für dieses Signal zu denen der übrigen Signale, welche aus der Überlagerung von Haupt- und Nebenprodukt entstehen, kann der Anteil an $MES_2TEG$ berechnet werden. Er beträgt ≈

15 Mol-%. Da das Nebenprodukt bei der weiteren Umsetzung nicht von Nachteil ist, wurde die Mischung nicht weiter aufgetrennt. Dies ist jedoch bei Bedarf ohne Probleme möglich, beispielsweise durch eine chromatographische Auftrennung, in der Kieselgel oder dgl. als stationäre Phase dient und ein übliches organisches Lösungsmittel verwendet wird.

Wird der Anteil an $MES_2TEG$ rechnerisch abgezogen, beträgt die Ausbeute 29,18 g (80,5 mmol, 81%)

$M_{ber.}$(MES-TEG, $C_{16}H_{26}O_9$) = 362,37 g/mol

*$^1$H-NMR* (400,1 MHz, $CDCl_3$):

$\delta$ [ppm] = 1,95 (s, 3 H, $C\underline{H}_3$), 2,67 (m, 4 H, $CC\underline{H}_2C\underline{H}_2C$), 3,60 - 3,62 (m, 2 H, $(OCH_2CH_2)_2$-$OCH_2C\underline{H}_2OH$), 3,65 - 3,73 (m, 8 H, $OCH_2C\underline{H}_2OC\underline{H}_2C\underline{H}_2OC\underline{H}_2CH_2OH$) 4,25 - 4,28 (m, 2 H, $OC\underline{H}_2CH_2(OCH_2CH_2)_2OH$), 4,35 (s, 4 H, $OC\underline{H}_2C\underline{H}_2O$), 5,60 - 5,61 (m, 1 H, $\underline{H}_2C$=, cis), 6,13 (s, 1 H, $\underline{H}_2C$=, trans).

*$^{13}$C-NMR* (100,6 MHz, $CDCl_3$):

$\delta$ [ppm] = 18,28 ($\underline{C}H_3$), 28,92 ($C\underline{C}H_2\underline{C}H_2C$), 61,75, 62,34, 62,40, 63,74, 69,04, 70,33, 70,58 u. 72,48 (4x $O\underline{C}H_2\underline{C}H_2O$), 126,13 ($H_2\underline{C}$=), 135,89 ($H_2C=\underline{C}(CH_3)C(O)OR$), 167,13 (=$C(CH_3)\underline{C}(O)OR$), 172,09 u. 172,23 ($O\underline{C}(O)CH_2CH_2\underline{C}(O)O$).

*FT-IR:* $\tilde{\nu}$[$cm^{-1}$] = 3463 (m, ν(OH)), 2955 u. 2876 (m, ν(CH)), 1737 (vs, ν(C=O)), 1637 (m, ν(C=C)).

*$\mu$-Raman:* $\tilde{\nu}$[$cm^{-1}$] = 2955 u. 2928 (vs, ν(CH)), 1714 (s, ν(C=O)), 1634 (s, ν(C=C)).

**Synthese 4-[2-(Methacryloyloxy)ethoxy]-4-oxo-butansäure-[3-hydroxy-2-hydroxymethylpropyl]-ester (MES-HPE)**

In Anlehnung an die Synthese von MES-TEG wird MES-HPE durch die Umsetzung von 2 Äquivalenten der Vorstufe MES-Cl mit 2-(Hydroxymethyl)propan-1,3-diol hergestellt. Ein Produktgemisch aus Mono-, Di- und Triester (letzterer ohne freie Hydroxygruppen) wird erhalten. Der Monoester ist ein Alkohol der obigen Formel $R^{2'}(OH)_2$, der Diester ein Alkohol der Formel $R^{1'}(OH)$.

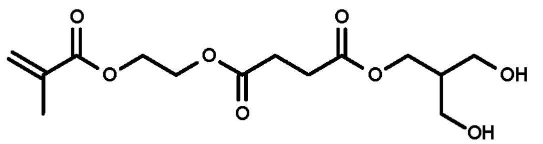

Monoester

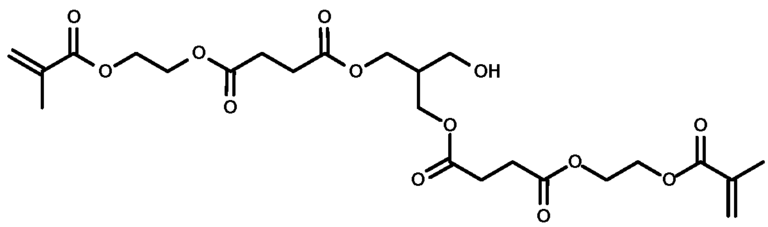

Diester

**4-[2-(Methacryloyloxy)ethoxy]-4-oxo-butansäure-glycerinester (MES-GE)**

In Anlehnung an die Synthese von MES-TEG wird MES-GE durch die Umsetzung der Vorstufe MES-Cl mit Glycerin hergestellt. Ein Produktgemisch aus Mono-, Di- und Triester wird erhalten. Nachstehend ist der Monoester gezeigt.

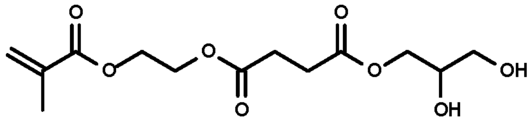

**Synthese von 4-[2-(Methacryloyloxy)ethoxy]-4-oxo-butansäure-hexaethyleneglykolester (MES-HEG)**

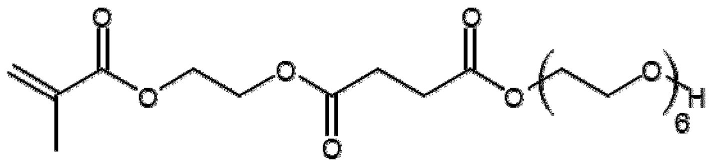

MES-HEG

Die Synthese von 4-[2-(Methacryloyloxy)ethoxy]-4-oxo-butansäure-hexaethylenglykolester (MES-HEG) erfolgte analog zur Umsetzung zu MES-TEG: Unter Stickstoffatmosphäre wurden 85,90 g (304,3 mmol, 3,2 Äquiv.) Hexaethylenglykol (HEG) und 8,71 g (110,1 mmol, 1,1 Äquiv.) Pyridin in 100 ml Dichlormethan gelöst. Unter Eiskühlung und Rühren wurden 23,68 g (95,2 mmol, 1,0 Äquiv.) MES-Cl zugegeben. Die Mischung wurde 24 h bei 30°C gerührt und das Produkt wie zuvor für MES-TEG beschrieben isoliert, gereinigt und stabilisiert.

Roh-Ausbeute: 32,74 g

Bei der Roh-Ausbeute ist der Anteil an disubstituiertem Hexaethylenglykol ($MES_2HEG$), der bei der Synthese als Nebenprodukt entsteht, noch nicht berücksichtigt. Dieser Anteil wurde mit Hilfe des $^1$H-NMR-Sepektrums ermittelt und beträgt ≈ 5 Mol-%. Da das Nebenprodukt bei der weiteren Umsetzung nicht von Nachteil ist, wurde die Mischung nicht weiter aufgereinigt. Dies ist jedoch bei Bedarf ohne Probleme möglich, beispielsweise durch eine chromatographische Auftrennung, in der Kieselgel oder dgl. als stationäre Phase dient und ein übliches organisches Lösungsmittel verwendet wird.

Wird der Anteil an $MES_2HEG$ rechnerisch abgezogen, beträgt die Ausbeute 30,45 g (61,6 mmol, 65%).

$M_{ber.}$(MES-HEG, $C_{16}H_{26}O_9$) = 494,53 g/mol

*$^1$H-NMR* (400,1 MHz, $CDCl_3$):

δ [ppm] = 1,95 (s, 3 H, C$\underline{H}_3$), 2,67 (m, 4 H, CC$\underline{H}_2$C$\underline{H}_2$C), 3,60 - 3,62 (m, 2 H, $(OCH_2CH_2)_5CH_2C\underline{H}_2OH$), 3,65 - 3,73 (m, 20 H, $OCH_2C\underline{H}_2(OC\underline{H}_2C\underline{H}_2)_4C\underline{H}_2CH_2OH$), 4,23 - 4,26 (m, 2 H, $OC\underline{H}_2CH_2(OCH_2CH_2)_5OH$), 4,35 (s, 4 H, $OC\underline{H}_2C\underline{H}_2O$), 5,60 - 5,61 (m, 1 H, $\underline{H}_2$C=, cis), 6,13 (s, 1 H, $\underline{H}_2$C=, trans). *$^{13}$C-NMR* (100,6 MHz, $CDCl_3$):

δ [ppm] = 18,27 ($\underline{C}H_3$), 28,92 ($C\underline{C}H_2\underline{C}H_2C$), 61,70, 62,34, 62,38, 63,89, 69,03, 70,33, 70,56, 70,60 u. 72,52 (7x $O\underline{C}H_2\underline{C}H_2O$), 126,12 ($H_2\underline{C}$=), 135,88 (=$\underline{C}(CH_3)C(O)OR$), 167,09 (=$C(CH_3)$-C(O)OR), 172,04 u. 172,19 ($O\underline{C}(O)CH_2CH_2\underline{C}(O)O$).

*FT-IR:* $\tilde{\nu}$[cm$^{-1}$] = 3466 (m, ν(OH)), 2873 (s, ν(CH)), 1737 (vs, ν(C=O)), 1637 (m, ν(C=C)).

*μ-Raman:* $\tilde{\nu}$[cm$^{-1}$] = 2935 u. 2888 (vs, ν(CH)), 1722 (m, ν(C=O)), 1643 (m, ν(C=C)).

**4-[2-(Methacryloyloxy)ethoxy]-4-oxo-butansäure-[3-hydroxy-2,2-dihydroxymethylpropyl]-ester (MES-HDPE)**

Ebenfalls in Anlehnung an die Synthese von MES-TEG wird MES-HDPE durch die Umsetzung der Vorstufe MES-Cl mit 2,2-Bis(hydroxymethyl)propan-1,3-diol hergestellt. Ein Produktgemisch aus Mono-, Di-, Tri- und Tetraester (letzterer ohne freie OH-Gruppen) wird erhalten. Nachstehend ist der Monoester gezeigt. Er entspricht der oben näher erläuterten Formel $R^{3'}(OH)_3$

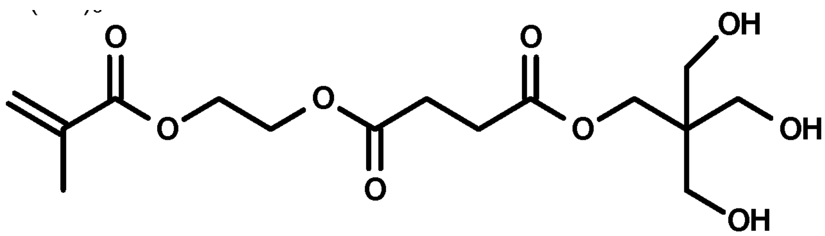

**Synthese von 4-{1,3-Bis[(methacryloyl)oxy]propan-2-yloxy}-4-oxo-butansäure (GDM-SA)**

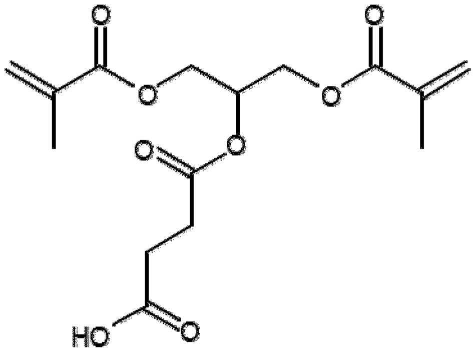

GDM-SA

Die Synthese von 4-{1,3-Bis[(methacryloyl)oxy]propan-2-yloxy}-4-oxo-butansäure (GDM-SA) erfolgte in Anlehnung an eine Vorschrift von J. H. Liu, D. S. Wu, K. Y. Tseng, Macromol. Chem. Physic. 2004, 205, 2205. Zu einer Lösung aus 32,10 g (320,8 mmol, 1,0 Äquiv.) Bernsteinsäureanhydrid (SA) und 665,3 mg (5,5 mmol, 0,02 Äquiv.) 4-Dimethylaminopyridin (DMAP) als Katalysator in 300 ml 1,4-Dioxan wurde eine weitere Lösung aus 73,21 g (320,8 mmol, 1,0 Äquiv.) 1,3-Glycerindimethacrylat (GDM) und 109,5 mg (0,2 Gew.-%) 4-Hydroxyanisol (HQME) als Stabilisator in 120 ml 1,4-Dioxan gegeben. Die Mischung wurde für 40 h bei 80°C refluxiert und anschließend für 1 h auf Raumtemperatur abgekühlt. Danach wurde sie mit 460 ml kaltem Dichlormethan verdünnt, zweimal mit je 330 ml kaltem Wasser gewaschen und über Natriumsulfat getrocknet. Das Lösemittel wurde unter vermindertem Druck entfernt und flüchtige Bestandteile im Ölpumpenvakuum abgetrennt.
Ausbeute: 96,97 g (295,4 mmol, 92 %)
$M_{ber.}$(GDM-SA, $C_{15}H_{20}O_8$) = 328,31 g/mol
*$^1$H-NMR* (400,1 MHz, $CDCl_3$):
δ [ppm] = 1,94 (s, 6 H, $C\underline{H}_3$), 2,67 (m, 4 H, $C\underline{H}_2C\underline{H}_2C$), 4,19 - 4,45 (m, 4 H, $OC\underline{H}_2CHORC\underline{H}_2O$), 5,36 - 5,45 (m, 1 H, $C\underline{H}$) 5,61 - 5,62 (m, 2 H, $\underline{H}_2C$=, cis), 6,13 (s, 2 H, $\underline{H}_2C$=, trans).
*$^{13}$C-NMR* (100,6 MHz, $CDCl_3$):
δ [ppm] = 18,23 ($\underline{C}H_3$), 28,73 u. 28,78 ($C\underline{C}H_2\underline{C}H_2C$), 62,48 u. 67,05 ($O\underline{C}H_2CHOR\underline{C}H_2O$), 69,51 ($\underline{C}H$), 126,51 ($H_2\underline{C}$=), 135,61 (=$\underline{C}(CH_3)C(O)OR$), 166,82 (=$C(CH_3)\underline{C}(O)OR$), 171,20 ($\underline{C}(O)OR$), 177,71 ($\underline{C}(O)OH$).
*FT-IR:* $\tilde{\nu}$[$cm^{-1}$] = 3265 (m, ν(OH)), 2961 u. 2930 (m, ν (CH)), 1724 (vs, ν (C=O)), 1638 (m, ν (C=C)).
*μ-Raman:* $\tilde{\nu}$[$cm^{-1}$] = 2965 u. 2932 (vs, ν C-H)), 1722 (s, ν C=O)), 1639 (s, ν C=C)).

**Synthese von 4-{1,3-Bis[(methacryloyl)oxy]propan-2-yloxy}-4-oxo-butansäurechlorid (GDM-SA-Cl)**

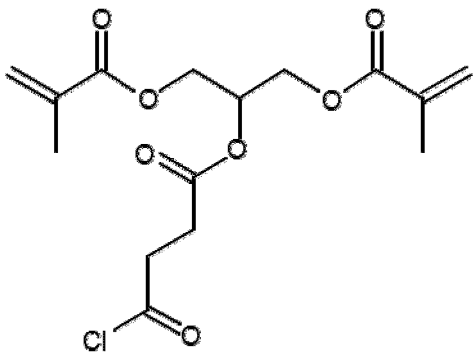

GDM-SA-Cl

Die Synthese von 4-{1,3-Bis[(methacryloyl)oxy]propan-2-yloxy}-4-oxo-butansäure (GDM-SA-Cl) wurde analog zur Synthese von MES-Cl durchgeführt: 90,30 g (275,0 mmol, 1,0 Äquiv.) GDM-SA wurden unter Stickstoffatmosphäre und Rühren mit 65,27 g (551,4 mmol, 2,0 Äquiv.) Thionylchlorid versetzt, für 30 min bei 30°C und 1 h bei 50°C gerührt. Hierauf wurden das überschüssige Thionylchlorid und flüchtige Bestandteile unter vermindertem Druck bzw. im Ölpumpenvakuum entfernt.
Ausbeute: 92,64 g (267,2 mmol, 97 %)
$M_{ber.}$(GDM-SA-Cl, $C_{15}H_{19}ClO_7$) = 346,76 g/mol
*$^1$H-NMR* (400,1 MHz, $CDCl_3$):
$\delta$ [ppm] = 1,95 (s, 6 H, $CH_3$), 2,70 - 2,73 (t, 2 H, $CH_2CH_2C(O)Cl$, $^3J_{HH}$ = 6,9 Hz), 3,21 - 3,24 (t, 2 H, $CH_2CH_2C(O)Cl$, $^3J_{HH}$ = 6,8 Hz), 4,25 - 4,44 (m, 4 H, $OCH_2CHORCH_2O$), 5,34 - 5,46 (m, 1 H, CH), 5,60 - 5,63 (m, 2 H, $H_2C$=, cis), 6,13 (m, 2 H, $H_2C$=, trans).
*$^{13}$C-NMR* (100,6 MHz, $CDCl_3$):
$\delta$ [ppm] = 18,25 ($CH_3$), 29,32 ($CH_2CH_2C(O)Cl$), 41,69 ($CH_2CH_2C(O)Cl$), 62,38 ($OCH_2CHORCH_2O$), 70,05 (CH), 126,57 ($H_2C$=), 135,58 (=$C(CH_3)C(O)OR$), 166,77 (=$C(CH_3)$-C(O)OR), 170,04 (C(O)OR) u. 172,81 (C(O)Cl).
*FT-IR:* $\tilde{\nu}$[$cm^{-1}$] = 2961 u. 2930 (m, v(CH)), 1794 (vs, RCOCl v C=O)), 1724 (vs, v C=O)), 1638 (m, v C=C)), 712 (m, v C-Cl)).
*$\mu$-Raman:* $\tilde{\nu}$[$cm^{-1}$] = 2965 u. 2932 (vs, v C-H)), 1797 (w, RCOCl v C=O)), 1722 (s, v C=O)), 1639 (s, v C=C)), 712 (w, v C-Cl)), 439 (s, v C-Cl)).

**Synthese von 4-{1,3-Bis[(methacryloyl)oxy]propan-2-yloxy}-4-oxo-butansäure-triethylenglykolester (GDM-SA-TEG)**

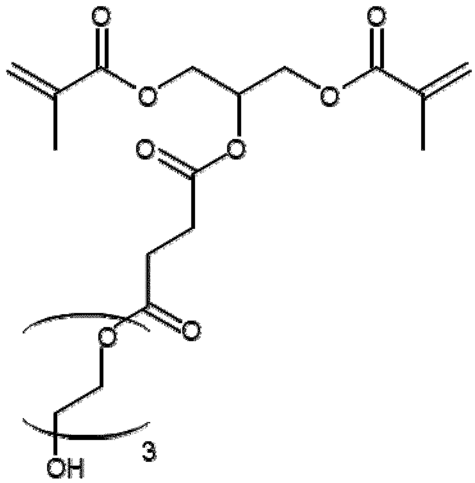

GDM-SA-TEG

Die weitere Umsetzung von GDM-SA zu 4-{1,3-Bis[(methacryloyl)oxy]propan-2-yloxy}-4-oxobutansäure-triethylenglykolester (GDM-SA-TEG) erfolgte analog zur Synthese von MES-TEG: 48,88 g (325,5 mmol, 3,4 Äquiv.) TEG und 9,32 g (117,8 mmol, 1,2 Äquiv.) Pyridin wurden unter Stickstoffatmosphäre in 100 ml Dichlormethan gelöst. 33,37 g (96,2 mmol, 1,0 Äquiv.) GDM-SA-Cl wurden unter Eiskühlung und Rühren zugegeben. Die Mischung wurde 24 h bei 30 C gerührt und das Produkt anschließend wie zuvor für MES-TEG beschrieben isoliert, gereinigt und stabilisiert.

Das Produkt ist ein Alkohol mit verzweigtem Kohlenwasserstoffgerüst, das an beiden der Hydroxygruppe abgewandten Enden des Gerüsts eine organisch polymerisierbare Gruppe (eine Methacrylatgruppe) trägt.
Roh-Ausbeute: 37,20 g

Bei der Roh-Ausbeute ist der Anteil an disubstituiertem Alkohol ($GDMSA_2TEG$), der bei der Synthese als Nebenprodukt entsteht, noch nicht berücksichtigt. Dieser Anteil wurde wie zuvor für MES-TEG beschrieben mit Hilfe des $^1$H-NMR-Sepektrums ermittelt und beträgt $\approx$ 20 Mol-%. Da das Nebenprodukt bei der weiteren Umsetzung nicht von Nachteil ist, wurde die Mischung nicht weiter aufgereinigt.

Wird der Anteil an $GDMSA_2TEG$ rechnerisch abgezogen, beträgt die Ausbeute 26,23 g (57,0 mmol, 59%).
$M_{ber.}$ (GDM-SA-TEG, $C_{21}H_{32}O_{11}$) = 460,47 g/mol
*$^1$H-NMR* (400,1 MHz, $CDCl_3$):
$\delta$ [ppm] = 1,94 (s, 6 H, $CH_3$), 2,67 (s, 4 H, $CCH_2CH_2C$), 3,60 - 3,62 (m, 2 H, $(OCH_2CH_2)_2OCH_2CH_2OH$), 3,65 - 3,74 (m, 8 H, $OH_2CH_2OCH_2CH_2OCH_2CH_2OH$), 4,25 - 4,45 (m, 6 H, $OCH_2CHORCH_2O$ u. $OCH_2CH_2(OCH_2CH_2)_2OH$), 5,36 - 5,43 (m, 1 H, CH), 5,61 (m, 2 H, $H_2C$=, cis), 6,12 - 6,13 (m, 2 H, $H_2C$=, trans).
*$^{13}$C-NMR* (100,6 MHz, $CDCl_3$):
$\delta$ [ppm] = 18,26 ($CH_3$), 28,89 u. 29,02 ($CCH_2CH_2C$), 61,74, 62,47, 63,75, 69,03, 70,33, 70,57 u. 72,47 (3x $OCH_2CH_2O$ u. $OCH_2CHORCH_2O$), 69,37 (CH), 126,46 ($H_2C$=), 135,64 (=$C(CH_3)C(O)OR$), 166,78 (=$C(CH_3)C(O)OR$), 171,40 u.

172,06 ($OC(O)CH_2CH_2C(O)O$).
*FT-IR:* $\tilde{\nu}$[$cm^{-1}$] = 3473 (m, ν(OH)), 2957, 2929 u. 2877 (m, ν CH)), 1725 (vs, ν C=O)), 1638 (m, ν C=C)).
*μ-Raman:* $\tilde{\nu}$[$cm^{-1}$] = 2962 u. 2932 (vs, ν C-H)), 1722 (s, ν C=O)), 1639 (s, ν (C=C)).

**Umsetzung von 4-[2-(Methacryloyloxy)ethoxy]-4-oxo-butansäure-triethylenglykolester (MES-TEG) mit Siliciumtetraacetat und Hydrolyse/Kondensation des Produkts zur Darstellung des Grundmaterial-Harzes (GM-Harz)**

10,37 g (39,2 mmol, 1,0 Äquiv.) Siliciumtetraacetat wurden mit 36,40 g 4-[2-(Methacryloyloxy)ethoxy]-4-oxo-butansäure-triethylenglykolester (MES-TEG), die ca. 15 Mol-% disubstituiertes Nebenprodukt ($MES_2TEG$) enthielten, versetzt. Dies entspricht einem Anteil an MES-TEG von 28,44 g (78,5 mmol, 2,0 Äquiv.). Diese Mischung wurde zunächst 1 min bei Raumtemperatur gerührt und daraufhin 3 h bei 15 mbar auf 50°C erhitzt. Das Produkt wurde 8 h im Ölpumpenvakuum von flüchtigen Bestandteilen befreit und mit Hilfe von Druckluft über einen Filter mit 30 μm Porengröße filtriert.
*$^1H$-NMR* (400,1 MHz, $CDCl_3$):
δ [ppm] = 1,95 (s, 6 H, $C\underline{H}_3$), 2,09 - 2,16 (m, Rest $C\underline{H}_3COOSi$), 2,67 (s, 8 H, $CC\underline{H}_2C\underline{H}_2C$), 3,60 - 3,71 (m, 16 H, $OCH_2C\underline{H}_2OC\underline{H}_2C\underline{H}_2OC\underline{H}_2CH_2OSi$), 3,92 - 4,09 (m, 4 H, $(OCH_2CH_2)_2O\text{-}CH_2C\underline{H}_2OSi$), 4,24 - 4,25 (m, 4 H, $OC\underline{H}_2CH_2(OCH_2CH_2)_2OSi$), 4,35 (m, 8 H $OC\underline{H}_2C\underline{H}_2O$), 5,60 - 5,61 (m, 2 H, $\underline{H}_2C$=, cis), 6,14 (m, 2 H, $\underline{H}_2C$=, trans).
Die Mischung wurde im Anschluss bei 30 °C in mehreren Schritten hydrolysiert. Dazu wurde sie jeweils mit 100 μl Wasser versetzt, 5 min gerührt, 5 h im Ölpumpenvakuum von flüchtigen Bestandteilen befreit und bis zum nächsten Intervall weiter gerührt. Der Hydrolysegrad der Si-OAc- und der Si-OAlk-Gruppen wurde jeweils mittels $^1H$-NMR überprüft. Die Wasserzugabe wurde solange wiederholt bis der restliche Acetatgehalt und die Alkoholhydrolyse möglichst gering waren.
Roh-Ausbeute: 33,96 g
Bei der Roh-Ausbeute ist der Anteil an disubstituiertem Alkohol ($MES_2TEG$), der in MES-TEG enthalten ist, bei der Synthese aber nicht umgesetzt wird, noch nicht berücksichtigt. Wird dieser Anteil rechnerisch abgezogen, beträgt die Ausbeute 26,00 g (32,4 mmol, 83%).
$M(GM)_{ber.}$ = ≈802 g/mol
*$^1H$-NMR* (400,1 MHz, $CDCl_3$):
δ [ppm] = 1,95 (s, 6 H, $C\underline{H}_3$), 2,08 - 2,11 (m, Rest $C\underline{H}_3COOSi$), 2,66 (s, 8 H, $CC\underline{H}_2C\underline{H}_2C$), 3,58 - 3,71 (m, 16 H, $OCH_2C\underline{H}_2OC\underline{H}_2C\underline{H}_2OC\underline{H}_2CH_2OSi$), 3,92 - 4,02 (m, 4 H, $(OCH_2CH_2)_2OCH_2C\underline{H}_2OSi$), 4,23 - 4,26 (m, 4 H, $OC\underline{H}_2CH_2(OCH_2CH_2)OSi$), 4,35 (m, 8 H, $OC\underline{H}_2C\underline{H}_2O$), 5,60 (m, 2 H, $\underline{H}_2C$=, cis), 6,13 (m, 2 H, $\underline{H}_2C$=, trans).
*$^{29}Si$-NMR* (75,5 MHz, Aceton-$d^6$):
δ [ppm] = -82,76 ($Q^0$, ≈11 %), -86,97 bis -89,99 ($Q^1$, ≈35 %), -94,00 bis -96,99 ($Q^2$, ≈38 %), -101,47 bis -103,22 ($Q^3$, ≈16 %).
Wird der Diester ($MES_2TEG$) vor der Herstellung des Harzes chromatographisch abgetrennt, erhält man das Harz mit bis zu 100% Ausbeute.

**Umsetzung von 4-[2-(Methacryloyloxy)ethoxy]-4-oxo-butansäure-hexaethylenglykolester (MES-HEG) mit Siliciumtetraacetat und Hydrolyse/Kondensation des Produkts zur Darstellung des Harzes für Strukturvariante I (SV I-Harz)**

14,09 g (53,3 mmol, 1,0 Äquiv.) Siliciumtetraacetat wurden mit 56,82 g 4-[2-(Methacryloyloxy)ethoxy]-4-oxo-butansäure-hexaethylenglykolester (MES-HEG), die ca. 5 Mol-% disubstituiertes Nebenprodukt enthielten, versetzt (Anteil an MES-HEG: 52,76 g (106,7 mmol, 2,0 Äquiv.)) und wie zuvor bei der Synthese von GM-Harz beschrieben umgesetzt, von flüchtigen Bestandteilen befreit und druckfiltriert.
*$^1H$-NMR* (400,1 MHz, $CDCl_3$):
δ [ppm] = 1,95 (s, 6 H, $C\underline{H}_3$), 2,08 - 2,16 (m, Rest $C\underline{H}_3COOSi$), 2,67 (s, 8 H, $CC\underline{H}_2C\underline{H}_2C$), 3,57 - 3,71 (m, 40 H, $OCH_2C\underline{H}_2(OC\underline{H}_2C\underline{H}_2)_4OC\underline{H}_2CH_2OSi$), 3,91 - 4,08 (m, 4 H, $(OCH_2CH_2)_5O\text{-}CH_2C\underline{H}_2OSi$), 4,23 - 4,26 (m, 4 H, $OC\underline{H}_2CH_2(OCH_2CH_2)_5OSi$), 4,35 (m, 8 H $OC\underline{H}_2C\underline{H}_2O$), 5,60 (m, 2 H, $\underline{H}_2C$=, cis), 6,13 (m, 2 H, $\underline{H}_2C$=, trans).
Die anschließende Hydrolyse/Kondensation erfolgte wie zuvor bei der Synthese von GM-Harz erläutert schrittweise bei 30°C und wurde mittels $^1H$-NMR kontrolliert.
Roh-Ausbeute: 54,48 g
Bei der Roh-Ausbeute ist der Anteil an disubstituiertem Alkohol ($MES_2HEG$), der in MES-HEG enthalten ist, bei der Synthese aber nicht umgesetzt wird, noch nicht berücksichtigt. Wird dieser Anteil rechnerisch abgezogen, beträgt die Ausbeute 50,42 g (47,0 mmol, 88%).
$M(SV\ I)_{ber.}$ = ≈1073 g/mol
*$^1H$-NMR* (400,1 MHz, $CDCl_3$):
δ [ppm] = 1,95 (s, 6 H, $C\underline{H}_3$), 2,06 - 2,11 (m, Rest $C\underline{H}_3COOSi$), 2,67 (s, 8 H, $CC\underline{H}_2C\underline{H}_2C$), 3,57 - 3,71 (m, 40 H, $OCH_2C\underline{H}_2(\underline{H}_2C\underline{H}_2)_4OC\underline{H}_2CH_2OSi$), 3,91 - 4,01 (m, 4 H, $(OCH_2CH_2)_5O\text{-}CH_2C\underline{H}_2OSi$), 4,23 - 4,26 (m, 4 H, $OC\underline{H}_2CH_2(OCH_2CH_2)_5OSi$), 4,35 (m, 8 H $OC\underline{H}_2C\underline{H}_2O$), 5,60 - 5,61 (m, 2 H, $\underline{H}_2C$=, cis), 6,13 (m, 2 H, $\underline{H}_2C$=, trans).

*$^{29}$Si-NMR* (75,5 MHz, Aceton-$d^6$):

$\delta$ [ppm] = -82,79 u. -83,47 ($Q^0$, 7 %), -86,02 bis -90,09 ($Q^1$, 30 %), -93,63 bis -97,40 ($Q^2$, 44 %), -100,60 bis -104,96 ($Q^3$, 19 %).

Wird der Diester ($MES_2HEG$) vor der Herstellung des Harzes chromatographisch abgetrennt, erhält man das Harz mit bis zu 100% Ausbeute.

**Umsetzung von 4-{1,3-Bis[(methacryloyl)oxy]propan-2-yloxy}-4-oxo-butansäuretriethylenglykolester (GDM-SA-TEG) mit Siliciumtetraacetat und Hydrolyse/ Kondensation des Produkts zur Darstellung des Harzes für Strukturvariante II (SV II-Harz)**

Die Umesterung an Siliciumtetraacetat durch GDM-SA-TEG wurde wie folgt durchgeführt: 7,91 g (29,9 mmol, 1,0 Äquiv.) Siliciumtetraacetat wurden mit 40,13 g 4-{1,3-Bis[(methacryloyl)oxy]propan-2-yloxy}-4-oxo-butansäure-triethylenglykolester (GDM-SA-TEG), die ca. 20 Mol-% disubstituiertes Nebenprodukt enthielten (Anteil an GDM-SA-TEG: 28,29 g (61,4 mmol, 2,0 Äquiv.)), umgesetzt. Das Produkt wurde anschließend von flüchtigen Bestandteilen befreit und druckfiltriert.

*$^1$H-NMR* (400,1 MHz, $CDCl_3$):

$\delta$ [ppm] = 1,94 (s, 12 H, $C\underline{H}_3$), 2,09 - 2,16 (m, Rest $C\underline{H}_3COOSi$), 2,66 (s, 8 H, $CC\underline{H}_2C\underline{H}_2C$), 3,58 - 3,69 (m, 16 H, $OCH_2C\underline{H}_2OC\underline{H}_2C\underline{H}_2OC\underline{H}_2CH_2OSi$), 3,92 - 4,09 (m, 4 H, $(OCH_2CH_2)_2O\text{-}CH_2C\underline{H}_2OSi$), 4,23 - 4,45 (m, 12 H, $OC\underline{H}_2CHORC\underline{H}_2O$ u. $OC\underline{H}_2CH_2(OCH_2CH_2)_2OSi$), 5,33 - 5,47 (m, 2 H, $C\underline{H}$), 5,61 (m, 4 H, $\underline{H}_2C$=, cis), 6,12 (m, 4 H, $\underline{H}_2C$=, trans).

Die Hydrolyse/Kondensation erfolgte wie zuvor bei der Synthese von GM-Harz erläutert schrittweise bei 30°C und wurde mittels $^1$H-NMR kontrolliert.

Roh-Ausbeute: 32,01 g

Bei der Roh-Ausbeute ist der Anteil an disubstituiertem Alkohol ($GDMSA_2TEG$), der in GDM-SA-TEG enthalten ist, bei der Synthese aber nicht umgesetzt wird, noch nicht berücksichtigt. Wird dieser Anteil rechnerisch abgezogen, beträgt die Ausbeute 20,17 g (20,6 mmol, 69%).

$M(SV\ II)_{ber.} = \approx 980$ g/mol

*$^1$H-NMR* (400,1 MHz, $CDCl_3$):

$\delta$ [ppm] = 1,94 (s, 12 H, $C\underline{H}_3$), 2,07 (m, Rest $C\underline{H}_3COOSi$), 2,66 (s, 8 H, $CC\underline{H}_2C\underline{H}_2C$), 3,58 - 3,75 (m, 16 H, $OCH_2C\underline{H}_2OC\underline{H}_2C\underline{H}_2OC\underline{H}_2CH_2OSi$), 3,92 -3,95 (m, 4 H, $(OCH_2CH_2)_2O\text{-}CH_2C\underline{H}_2OSi$), 4,23 - 4,45 (m, 12 H, $OC\underline{H}_2CHOC\underline{H}_2O$ u. $OC\underline{H}_2CH_2(OCH_2CH_2)_2OSi$), 5,37 - 5,46 (m, 2 H, $C\underline{H}$), 5,61 (m, 4 H, $\underline{H}_2C$=, cis), 6,12 (m, 4 H, $\underline{H}_2C$=, trans).

*$^{29}$Si-NMR* (75,5 MHz, Aceton-$d^6$):

$\delta$ [ppm] = -82,80 ($Q^0$, ≈30 %), -89,4 bis -89,51 ($Q^1$, ≈38 %), -96,51 bis -96,78 ($Q^2$, ≈24 %), -98,77 bis -110,12 ($Q^3$, ≈8 %).

**Umsetzung von 4-[2-(Methacryloyloxy)ethoxy]-4-oxo-butansäure-[3-hydroxy-2-hydroxymethylpropyl]-ester (MES-HPE) mit Siliciumtetraacetat und Hydrolyse/ Kondensation des Produkts zur Darstellung des Harzes für Strukturvariante IV (SV IV-Harz)**

Die Umesterung an Siliciumtetraacetat durch MES-HPE wurde wie folgt durchgeführt:

1,0 Äquivalent Siliciumtetraacetat wurde mit 2,0 Äquivalenten der Mischung aus Mono-, Di- und möglicherweise Triester umgesetzt. Das Produkt wurde anschließend von flüchtigen Bestandteilen befreit und druckfiltriert. Das entstandene Produkt wurde nicht auf das Vorhandensein unumgesetzten Triesters untersucht; sollte er vorhanden sein, trägt er als rein organische Komponente bei der anschließenden organischen Polymerisation zur Erhöhung des Vernetzungsgrades bei.

Hierbei handelt es sich um ein Beispiel für die Umsetzung von Silanen (A) mit Alkoholmischungen ($R^{1\prime}OH$ und $R^{2\prime}(OH)_2$). Nachstehend seien beispielhaft Teile von Verbindungen gezeigt, die sich bilden können (es handelt sich um Teile der Strukturen (2) und (3) und der Struktur (9))

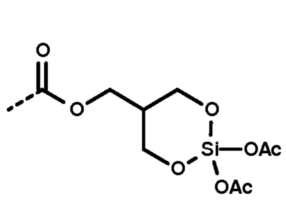

(2)

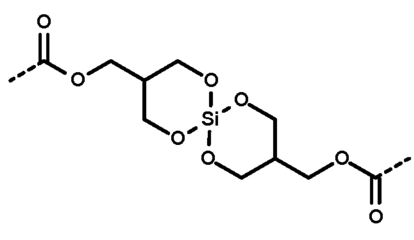

(3)

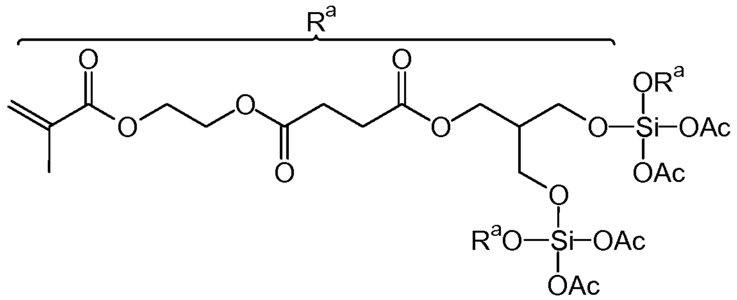

(9)

wobei zu Struktur (9) zu ergänzen ist, dass der hier mit $R^a$ angegebene Rest einmal $R^2$ (gebunden an beide Si-Atome) und zweimal $R^{2''}$(OH) (jeweils an ein Si-Atom gebunden) entspricht.

**Umsetzung von 4-[2-(Methacryloyloxy)ethoxy]-4-oxo-butansäure-glycerinester MES-GE mit Siliciumtetraacetat und Hydrolyse/ Kondensation des Produkts zur Darstellung des Harzes für Strukturvariante V (SV V-Harz)**

In Anlehnung an die Synthese von GM-Harz wird SV V-Harz durch die Umsetzung von MES-GE mit Siliciumtetraacetat hergestellt.

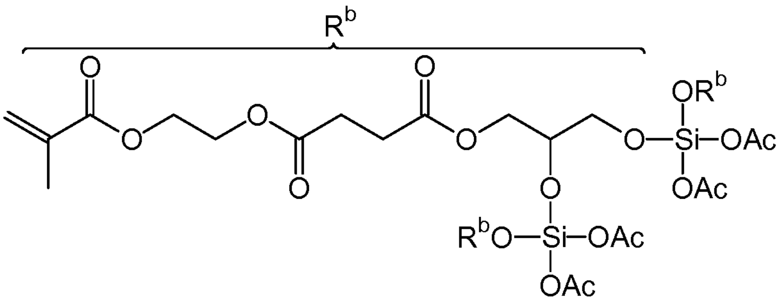

Die gezeigte Struktur entspricht Struktur (9); die im Zusammenhang mit dem SV IV-Harz gemachten Aussagen gelten entsprechend, wobei anstelle des Restes $R^a$ der Rest $R^b$ steht.

**Umsetzung von 4-[2-(Methacryloyloxy)ethoxy]-4-oxo-butansäure-[3-hydroxy-2,2-dihydroxymethylpropyl]-ester MES-HDPE mit Siliciumtetraacetat und Hydrolyse/ Kondensation des Produkts zur Darstellung des Harzes für Strukturvariante VI (SV VI-Harz)**

In Anlehnung an die Synthese von GM-Harz wird SV VI-Harz durch die Umsetzung von MES-HDPE mit Siliciumtetraacetat hergestellt. Hierbei handelt es sich um ein Beispiel für die Umsetzung von Silanen (A) mit Alkoholmischungen ($R^{1'}$OH, $R^{2'}(OH)_2$ und $R^x(OH)_x$ mit x = 3). Es bildet sich ein Netzwerk, in dem, wie oben erwähnt, wiederum ein Teil der organischen Reste freie OH-Gruppen tragen können. Nachstehend sei beispielhaft eine Strukturkomponente gezeigt, in der der vollständig abgebildete Rest $R^c$ teils keine OH-Gruppen trägt, die übrigen Reste $R^c$ aber eine oder sogar zwei OH-Gruppen tragen können.

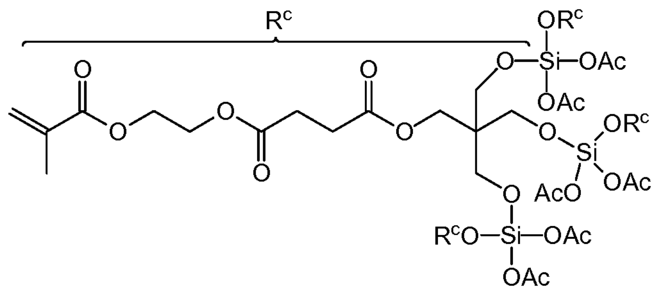

**Partielle Hydrolyse und Kondensation von Ethyltriacetoxysilan (pHK-EtSi(OAc)$_3$)**

5,00 g (21,4 mmol, 1,0 Äquiv.) Ethyltriacetoxysilan wurden in 3,72 g (64,0 mmol, 3,0 Äquiv.) Aceton-d$^6$ gelöst und unter Rühren bei 30°C mit 285 µl (15,8 mmol, 0,7 Äquiv.) Wasser in Form einer $10^{-2}$ molaren Salzsäurelösung versetzt (pHK-EtSi(OAc)$_3$-V1). Die Mischung wurde für 24 h bei Raumtemperatur gerührt und nicht weiter aufgearbeitet, um das Gleichgewicht nicht zu beeinträchtigen.

Die Synthese wurde analog mit $10^{-1}$ und 1 molarer Salzsäurelösung durchgeführt (pHK-EtSi(OAc)$_3$-V2 u. -V3). Die Auswertung der entsprechenden $^1$H-NMR-Spektren für pHK-EtSi(OAc)$_3$-V1 bis -V3 ist in der nachfolgenden Tabelle A5 zusammen gefasst.

**Tab. A5: Integrale der CH$_3$-Gruppen in den $^1$H-NMR-Spektren der Mischungen pHK-EtSi(OAc)$_3$-V1 bis -V3 zur partiellen Hydrolyse und Kondensation von Ethyltriacetoxysilan in Aceton-d$^6$ nach 24 h.**

| Mischung | c(HCl) [mol/l] | Anteil an C$\underline{H}_3$COOSi 2,06 - 2,10 ppm [%] | Anteil an C$\underline{H}_3$COOH 2,01 ppm [%] |
|---|---|---|---|
| pHK-EtSi(OAc)$_3$-V1 | $10^{-2}$ | 51 | 49 |
| pHK-EtSi(OAc)$_3$-V2 | $10^{-1}$ | 51 | 49 |
| pHK-EtSi(OAc)$_3$-V3 | 1 | 54 | 46 |

Die Ergebnisse der $^{29}$Si-NMR-Messungen für pHK-EtSi(OAc)$_3$-V1 bis -V3 zur Ermittlung des Kondensationsgrads der Mischungen sind in Tabelle A6 zusammengefasst. Der Kondensationsgrad wurde nach der nachstehenden Formel

$$K=\frac{1\,M^1+1\,D^1+2\,D^2+1\,T^1+2\,T^2+3\,T^3+1\,Q^1+2\,Q^2+3\,Q^3+4\,Q^4}{1\,(M^0+M^1)+2\,(D^0+D^1+D^2)+3\,(T^0+T^1+T^2+T^3)+4\,(Q^0+Q^1+Q^2+Q^3+Q^4)}$$

ermittelt. Für die partielle Hydrolyse und Kondensation von Ethyltriacetoxysilan sind lediglich T-Gruppen zu beachten.

**Tab. A6: Verteilung der T-Gruppen in den $^{29}$Si-NMR-Spektren der Mischungen pHK-EtSi(OAc)$_3$-V1 bis -V3 für die partielle Hydrolyse von Ethyltriacetoxysilan nach 6 h.**

| Mischung | c(HCl) [mol/l] | Anteil an T$^0$ -43,91 ppm [%] | Anteil an T$^1$ -49,12 bis -52,82 ppm [%] | Anteil an T$^2$ -55,99 bis -60,47 ppm [%] | Anteil an T$^3$ -66,04 bis -67,20 ppm [%] | K [%] |
|---|---|---|---|---|---|---|
| pHK-EtSi (OAc)$_3$-V1 | $10^{-2}$ | <1 | 69 | 15 | 16 | 49 |
| pHK-EtSi (OAc)$_3$-V2 | $10^{-1}$ | 2 | 66 | 16 | 16 | 49 |
| pHK-EtSi (OAc)$_3$-V3 | 1 | 7 | 59 | 18 | 16 | 48 |

**Cokondensation des Produkts aus 4-[2-(Methacryloyloxy)ethoxy]-4-oxo-butansäuretriethylenglykolester und Siliciumtetraacetat ((MES-TEG)$_2$-Si(OAc)$_2$) mit teilhydrolysiertem Ethyltriacetoxysilan (pHK-EtSi(OAc)$_3$-V3) zur Darstellung des Harzes für Strukturvariante III (SV III-Harz)**

In einer weiteren Synthese wurde das Additionsprodukt aus MES-TEG und Siliciumtetraacetat ((MES-TEG)$_2$Si(OAc)$_2$) mit teilkondensiertem Ethyltriacetoxysilan (pHK-EtSi(OAc)$_3$-V3) umgesetzt.

Dazu wurden 9,56 g (36,2 mmol, 1,0 Äquiv.) wie zuvor beschrieben mit 33,55 g (85,1 mmol) 4-[2-(Methacryloyloxy)ethoxy]-4-oxo-butansäure-triethylenglykolester, die ca. 15 Mol-% disubstituiertes Nebenprodukt enthielten, versetzt (Anteil an MES-TEG: 26,21 g (72,3 mmol, 2,0 Äquiv.), umgesetzt und das Reaktionsprodukt von flüchtigen Bestandteilen befreit. Außerdem wurden 8,49 g (36,2 mmol, 1,0 Äquiv.) Ethyltriacetoxysilan in 6,32 g (108,8 mmol, 3,0 Äquiv.) Aceton gelöst, mit 480 µl Wasser (26,6 mmol, 0,74 Äquiv.) in Form einer $10^{-2}$ molaren Salzsäurelösung versetzt

und für 24 h bei 30°C gerührt. Daraufhin wurden beide Mischungen zusammen gegeben, das Lösemittel unter vermindertem Druck bzw. im Ölpumpenvakuum entfernt.
*$^{1}H$-NMR* (400,1 MHz, $CDCl_3$):
δ [ppm] = 0,71 - 1,05 (m, 5H, $C\underline{H}_3C\underline{H}_2Si$), 1,95 (s, 6 H, $C\underline{H}_3$), 2,08 - 2,16 (m, Rest $C\underline{H}_3COOSi$), 2,67 (s, 8 H, $CC\underline{H}_2C\underline{H}_2C$), 3,58 - 3,71 (m, 16 H, $OCH_2C\underline{H}_2OC\underline{H}_2C\underline{H}_2O\text{-}C\underline{H}_2CH_2OSi$), 3,92 - 4,09 (m, 4 H, $(OCH_2CH_2)_2OCH_2C\underline{H}_2OSi$), 4,23 - 4,27 (m, 4 H, $OC\underline{H}_2CH_2(OCH_2CH_2)_2OSi$), 4,35 (m, 8 H $OC\underline{H}_2C\underline{H}_2O$), 5,60 - 5,61 (m, 2 H, $\underline{H}_2C$=, cis), 6,13 (m, 2 H, $\underline{H}_2C$=, trans).

Die beiden Verbindungen wurden danach wie bei der Synthese von GM-Harz näher erläutert schrittweise bei 30°C hydrolysiert und cokondensiert. Die Reaktion wurde dabei mittels $^{1}H$-NMR kontrolliert.
*$^{1}H$-NMR* (400,1 MHz, $CDCl_3$):
δ [ppm] = 0,64 - 1,00 (m, 5H, $C\underline{H}_3C\underline{H}_2Si$), 1,95 (s, 6 H, $C\underline{H}_3$), 2,06 - 2,08 (m, Rest $C\underline{H}_3COOSi$), 2,66 (s, 8 H, $CC\underline{H}_2C\underline{H}_2C$), 3,59 - 3,72 (m, 16 H, $OCH_2C\underline{H}_2OC\underline{H}_2C\underline{H}_2O\text{-}C\underline{H}_2CH_2OSi$), 3,92 - 3,95 (m, 4 H, $(OCH_2CH_2)_2OCH_2C\underline{H}_2OSi$), 4,23 - 4,26 (m, 4 H, $OC\underline{H}_2CH_2(OCH_2CH_2)_2OSi$), 4,35 (m, 8 H $OC\underline{H}_2C\underline{H}_2O$), 5,60 (m, 2 H, $\underline{H}_2C$=, cis), 6,13 (m, 2 H, $\underline{H}_2C$=, trans).
*$^{29}Si$-NMR* (75,5 MHz, Aceton-$d^6$):
δ [ppm] = -50,12 bis -61,44 ($T^1$, ≈20%), -58,06 bis -61,44 ($T^2$, ≈28%), -66,87 bis -67,26 ($T^3$, ≈5%), -82,81 ($Q^0$, ≈3%), -86,10 bis -89,42 ($Q^1$, ≈9%), -93,70 bis -96,25 ($Q^2$, ≈22%), -100,74 bis -103,34 ($Q^3$, ≈12%), -109,67 ($Q^4$, <1%).
Roh-Ausbeute: 33,21 g

Bei der Roh-Ausbeute ist der Anteil an disubstituiertem Alkohol ($MES_2TEG$), der in MES-TEG enthalten ist, bei der Synthese aber nicht umgesetzt wird, noch nicht berücksichtigt. Wird dieser Anteil rechnerisch abgezogen, beträgt die Ausbeute 25,87 g (60,2 mmol, 83%).

Wird der Diester ($MES_2TEG$) vor der Herstellung des Harzes chromatographisch abgetrennt, erhält man das Harz mit bis zu 100% Ausbeute.
$M(SV\ III)_{ber.}$ = ≈860 g/mol

**Polymerisationsprodukte**

Die zu untersuchenden Harzsysteme wurden jeweils mit 1 Gew.-% des Photoinitiators Lucirin-TPO versetzt und solange bei 30°C bzw. 40°C gerührt, bis der Initiator gelöst war (ca. 24 - 48 h).

In Anlehnung an DIN 53504 wurden Prüfkörper mit einer Gesamtlänge von 54 mm und einem Querschnitt von 2 mm x 4 mm hergestellt. Die Enden wurden dabei 30 s und der Steg insgesamt 100 s pro Seite mit einer Blaulicht-Lampe der Firma VOCO im Wellenlängenbereich 380 - 520 nm bestrahlt.

Neben den oben beschriebenen Harzsystemen wurde weiterhin das Photopolymerisationsprodukt aus GM-Harz mit Lucirin und Trimethylolpropantri(3-mercaptopropionat) (TMPMP) untersucht. Hierfür wurden in einer Mischung aus 1,98 g (2,5 mmol) GM-Harz und 0,02 mg Lucirin 0,54 g (1,3 mmol) TMPMP gelöst. Die erhaltene Harzmischung wurde in einer Prüfkörperform (Durchmesser ca. 10 mm, Dicke ca. 2 mm) photoinduziert ausgehärtet.

Die Zugfestigkeitsmessungen ergaben, dass der Zusatz der Trithiolverbindung ein flexibleres Produkt liefert, verglichen mit demselben Harz ohne Zusatz von Thiol. Dies dürfte daran liegen, dass die Vernetzung durch den Zusatz der Thiolverbindung grobmaschiger wird.

Für die Degradationsuntersuchungen und Biokompatibilitätstests wurden Prüfkörper in Scheibenform (Durchmesser ca. 10 mm, Höhe ca. 2 mm) mit einem Gewicht von je etwa 200 mg durch Bestrahlung der Harzsysteme mit obiger Lichtquelle hergestellt. Jede Scheibenseite wurde 100 s lang belichtet, der Rand weitere 30 s. Die einzelnen Prüfkörper wurden sodann gewogen und einzeln in Probengläschen mit 1 ml Pufferlösung gelagert. Nach 3 Tagen wurden die Pufferlösungen ausgewechselt. Jeweils nach 1 Woche, 4 Wochen und 16 Wochen (unter wöchentlicher Erneuerung der Pufferlösungen) wurden Prüfkörper entnommen und getrocknet. Anschließend wurde ihr Massenverlust bestimmt.

Alternativ können die Harzsysteme auch mit 1 Gew.-% eines thermischen Initiators, wie z. B. Dibenzoylperoxid versetzt werden und bei 40°C gerührt werden, bis sich dieser gelöst hat (etwa 24 h). Danach können Proben hergestellt werden, indem die Formulierung bei 100°C für 4 h ausgehärtet wird.

## Patentansprüche

**1.** Silan oder Silangemisch, erhältlich durch Umsetzung eines hydrolysierbaren Silans der Formel (A)

$$SiR_4 \qquad (A),$$

worin R eine hydrolytisch kondensierbare Gruppe oder Hydroxy bedeutet, mit
einer Verbindung $R^*(OH)_x$,
mit x gleich 1, 2, 3 oder größer 3, wobei R* ein geradkettiges oder verzweigtes, je nach Anzahl von x einbindiges,

zweibindiges, dreibindiges oder mehrbindiges Kohlenwasserstoffgerüst mit einer kohlenwasserstoffhaltigen Kette aufweist, die durch mindestens zwei -C(O)O-Gruppen unterbrochen ist, wobei in den einzelnen, durch Unterbrechungen gebildeten Kohlenwasserstoff-Einheiten innerhalb dieser Kette maximal 8 Kohlenstoffatome aufeinander folgen und das oder, im Falle verzweigter Strukturen, mindestens ein der einzigen Hydroxygruppe oder einer der Hydroxygruppen abgewandtes Ende der kohlenwasserstoffhaltigen Kette eine organisch polymerisierbare Gruppe trägt, wobei die Verbindung $R^*(OH)_x$ im Übrigen unsubstituiert ist oder weitere Substituenten aufweist, mit der Maßgabe, dass folgende Silane ausgeschlossen sind:
Silicium-tetra(dicaprylethoxyacrylat) und

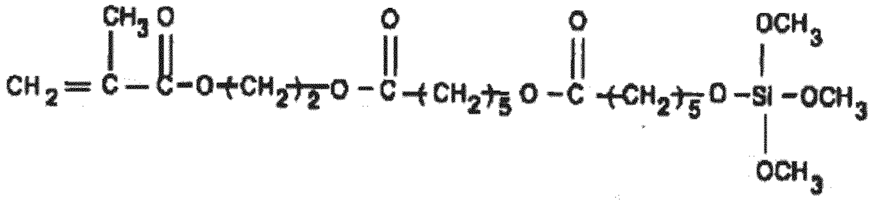

2. Silan oder Silangemisch nach Anspruch 1, worin jede der OH-Gruppen der Verbindung $R^*(OH)_x$ eine Alkoholgruppe oder Bestandteil einer Carbonsäuregruppe ist, wobei Verbindungen $R^*(OH)_x$ mit $x > 1$ sowohl Alkoholgruppen als auch Carbonsäuregruppen enthalten oder Polyalkohole oder Polycarbonsäuren sein können.

3. Silan der Formel (1)

$$R^1_aSiR_{4-a} \qquad (1)$$

worin $R^1$ die Bedeutung eines einbindigen Restes -OR* besitzt, wobei R* wie in Anspruch 1 definiert ist und über das Sauerstoffatom an das Siliciumatom gebunden ist, R eine hydrolytisch kondensierbare Gruppe oder Hydroxy bedeutet und a 1, 2, 3 oder 4 ist.

4. Silan oder Silangemisch nach einem der Ansprüche 1 bis 3, worin R die Bedeutung $R'COO^-$ oder OR' oder OH besitzt, wobei R' geradkettiges, verzweigtes oder einen nichtaromatischen Ring aufweisendes Alkyl und vorzugsweise Methyl oder Ethyl ist.

5. Silan oder Silangemisch nach einem der voranstehenden Ansprüche, worin die hydrolytisch kondensierbare Gruppe R ausgewählt ist unter Acyl, Alkyl und Alkoxy.

6. Silangemisch aus unterschiedlichen Silanen, wie sie in Anspruch 3 oder einem davon abhängigen Anspruch beansprucht sind, einschließlich der in Anspruch 1 ausgeschlossenen Silane, wobei verschiedenen Silane des Gemischs denselben Substituenten $R^1$ und unterschiedliche Werte für den Index a besitzen, wobei der Durchschnittswert für a im Gemisch bei 2 liegt.

7. Organisch modifiziertes Kieselsäurepolykondensat, entstanden durch hydrolytische Kondensation eines Silans oder Silangemischs gemäß einem der Ansprüche 1 bis 6.

8. Organisch modifiziertes, polymerisiertes Kieselsäurepolykondensat, entstanden durch hydrolytische Kondensation eines Silans oder Silangemischs der Ansprüche 1 bis 6 und nachfolgende organische Polymerisation der organisch polymerisierbaren Gruppen.

9. Organisch modifiziertes polymerisiertes Kieselsäurepolykondensat, entstanden durch

(a) hydrolytische Kondensation eines Silans oder Silangemischs nach einem der Ansprüche 1 bis 6, worin mindestens ein Teil der organisch polymerisierbaren Reste am Substituenten $R^1$ eine C=C-Doppelbindung und/oder ein ringöffnendes System aufweist,
(b) Zugabe einer organischen, mindestens difunktionellen Verbindung, ausgewählt unter Mercaptoverbindungen und Aminen, in einem molaren Unterschuss, bezogen auf das Verhältnis von Mercapto- und/oder Amino-Gruppen zu den C=C-Doppelbindungen und/oder ringöffnenden Systemen, optional weiterhin unter Zusatz eines Initiators für die zwischen den C=C-Doppelbindungen und/oder ringöffnenden Systemen und den Mercapto- und/oder Aminogruppen stattfindenden Michael-Addition, und

(c) nachfolgende organische Polymerisation der verbliebenen organisch polymerisierbaren Gruppen.

**10.** Organisch modifiziertes Kieselsäurepolykondensat, entstanden durch

(a) hydrolytische Kondensation eines Silans oder Silangemischs nach einem der Ansprüche 1 bis 6 , worin mindestens ein Teil der organisch polymerisierbaren Reste am Substituenten $R^1$ eine C=C-Doppelbindung und/oder ein ringöffnendes System aufweist, und
(b) Zugabe einer organischen, mindestens difunktionellen Verbindung, ausgewählt unter Mercaptoverbindungen und Aminen, in einer solchen Menge, dass mindestens eine Mercapto- oder Aminogruppe pro organisch polymerisierbarer Gruppe zur Verfügung steht, optional weiterhin unter Zusatz eines Initiators für die zwischen den C=C-Doppelbindungen und/oder ringöffnenden Systemen und den Mercapto- und/oder Aminogruppen stattfindenden Michael-Addition, derart, dass alle diese Gruppen über die Vernetzungsreaktion mit den Thiolen bzw. Aminen abreagieren.

**11.** Organisch modifiziertes Kieselsäurepolykondensat, entstanden durch hydrolytische Kondensation eines Silans oder Silangemischs einem der Ansprüche 1 bis 6, wobei das dabei gebildete Kieselsäurepolykondensat weiterhin in Mischung mit einer rein organischen Verbindung vorliegt, die mindestens zwei organisch polymerisierbare Gruppen aufweist, und nachfolgende organische Polymerisation der organisch polymerisierbaren Gruppen der Mischung.

**12.** Organisch modifiziertes, polymerisiertes Kieselsäurepolykondensat, entstanden durch

(a) hydrolytische Kondensation eines Silans oder Silangemischs nach einem der Ansprüche 1 bis 6, worin mindestens ein Teil der organisch polymerisierbaren Reste am Substituenten $R^1$ eine C=C-Doppelbindung und/oder ein ringöffnendes System aufweist, wobei das dabei entstandene Kieselsäurepolykondensat weiterhin in Mischung mit einer rein organischen Verbindung vorliegt, die mindestens zwei organisch polymerisierbare Gruppen aufweist,
(b) Zugabe einer organischen, mindestens difunktionellen Verbindung, ausgewählt unter Mercaptoverbindungen und Aminen, in einem molaren Unterschuss, bezogen auf das Verhältnis von Mercapto- und/oder Amino-Gruppen zu den C=C-Doppelbindungen und/oder ringöffnenden Systemen, optional weiterhin unter Zusatz eines Initiators für die zwischen den C=C-Doppelbindungen und/oder ringöffnenden Systemen und den Mercapto- und/oder Aminogruppen stattfindenden Michael-Addition, und
(c) nachfolgende organische Polymerisation der verbliebenen organisch polymerisierbaren Gruppen.

**13.** Verwendung eines organisch modifizierten, polymerisierten Kieselsäurepolykondensats nach einem der Ansprüche 8 bis 12 zur Herstellung eines biologisch oder medizinisch verwendbaren Gegenstands oder eines Gegenstands zur Zellstabilisierung oder Zellzüchtung.

**14.** Verfahren zum Herstellen eines Silans oder Silangemischs nach einem der Ansprüche 1 bis 6, wobei ein Silan der Formel (A) wie in Anspruch 1 definiert mit einer Verbindung $R^*(OH)_x$ wie in Anspruch 1 definiert umgesetzt wird, vorzugsweise im Molverhältnis von zwischen 1 : 1,5 bis 1 : 2,5, stärker bevorzugt im Molverhältnis von 1 : 2.

**15.** Verfahren zum Herstellen eines organisch polymerisierbaren Kieselsäurepolykondensats nach Anspruch 7, umfassend (a) die Umsetzung eines Silans der Formel (A) wie in Anspruch 1 definiert mit einer Verbindung $R^*(OH)_x$ wie in Anspruch 1 definiert, vorzugsweise im Molverhältnis von zwischen 1 : 1,5 bis 1 : 2,5, stärker bevorzugt im Molverhältnis von 1 : 2, und (b) die anschließende, mindestens zweistufige Hydrolyse des entstandenen Silans mit einer katalytischen Menge an Wasser, wobei nach jeder Hydrolysestufe vorhandene bzw. entstandene flüchtige Bestandteile unter Anlegen eines Unterdrucks entfernt werden.

## Claims

**1.** A silane or silane blend, obtainable by reaction of a hydrolyzable silane represented by the formula (A)

$$SiR_4 \qquad (A),$$

wherein R is a hydrolytically condensable group or hydroxy, with
a compound $R^*(OH)_x$,
wherein x is 1, 2, 3 or larger than 3, R* is a straight-chain or branched hydrocarbon skeleton which is monovalent,

divalent, trivalent or multivalent, depending on the number of x, and which has a hydrocarbon-containing chain interrupted by at least two -C(O)O-groups, wherein in the individual hydrocarbon units formed by the interruptions, up to 8 carbon atoms succeed each other, and the end or, in case of branched structures, at least one end of the hydrocarbon-containing chain remote from the only hydroxyl group or of one of the hydroxyl groups, carries an organically polymerizable group, wherein the compound $R^*(OH)_x$ is otherwise unsubstituted or comprises further substituents,
provided the following silanes are excluded:
silicon-tetra(dicaprylethoxy acrylate) and

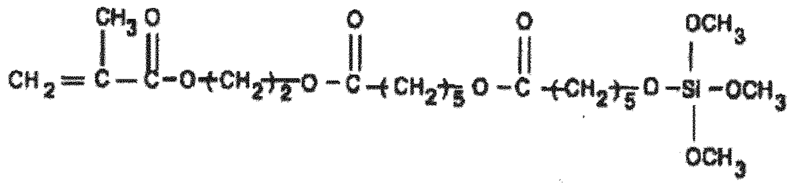

.

2. The silane or silane blend according to claim 1, wherein each of the OH groups of the compound $R^*(OH)_x$ is an alcohol group or a part of a carboxylic acid group, wherein compounds $R^*(OH)_x$ with $x > 1$ can contain alcohol groups and carboxylic acid groups or can be polyalcohols or polycarboxylic acids.

3. A silane represented by the formula (1)

$$R^1_aSiR_{4-a} \qquad (1)$$

wherein $R^1$ represents a monovalent residue -OR*, wherein R* is defined as in claim 1 and is linked to the silicon atom via the oxygen atom, R is a hydrolytically condensable group or hydroxyl and a is 1, 2, 3 or 4.

4. The silane or silane blend according to one of the claims 1 to 3, wherein R represents $R'COO^-$ or OR' or OH, wherein R' is a straight-chain, branched or a non-aromatic ring-containing alkyl, and preferably is methyl or ethyl.

5. The silane or silane blend according to one of the preceding claims, wherein the hydrolytically condensable group R is selected from acyl, alkyl and alkoxy.

6. A silane blend of different silanes as claimed in claim 3 or in a claim depending thereon, including the silanes excluded in claim 1, wherein different silanes of the blend have the same substituent $R^1$ and different values of the index a, wherein the average value for a in the blend is 2.

7. An organically modified silicic acid polycondensate, obtained by hydrolytic condensation of a silane or silane blend according to one of the claims 1 to 6.

8. An organically modified, polymerized silicic acid polycondensate, obtained by hydrolytic condensation of a silane or silane blend according to one of the claims 1 to 6 and a subsequent organic polymerization of the organically polymerizable groups.

9. An organically modified, polymerized silicic acid polycondensate, obtained by

(a) hydrolytic condensation of a silane or silane blend according to one of the claims 1 to 6, wherein at least a part of the organically polymerizable groups at the substituent $R^1$ comprises a C=C double bond and/or a ring-opening system,
(b) addition of an organic, at least difunctional compound, selected from mercapto compounds and amines, in a molar deficient proportion with respect to the ratio of mercapto groups and/or amino groups to the C=C double bonds and/or the ring-opening systems, optionally further adding an initiator for the Michael addition between the C=C double bonds and/or ring-opening systems and the mercapto groups and/or amino groups, and
(c) a subsequent organic polymerization of the remaining organically polymerizable groups.

10. An organically modified silicic acid polycondensate, obtained by

(a) hydrolytic condensation of a silane or silane blend according to one the claims 1 to 6, wherein at least a part of the organically polymerizable groups at the substituent $R^1$ comprises a C=C double bond and/or a ring-opening system, and
(b) addition of an organic, at least difunctional compound, selected from mercapto compounds and amines, in such an amount that at least one mercapto group or amino group is available per organically polymerizable group, optionally further adding an initiator for the Michael addition between the C=C double bonds and/or ring-opening systems and the mercapto groups and/or amino groups in such a manner that all of these groups react via the cross-linking reaction with the thiols and/or amines.

**11.** An organically modified silicic acid polycondensate, obtained by hydrolytic condensation of a silane or silane blend according to one of the claims 1 to 6, wherein silicic acid polycondensate formed therein is in the form of a blend with a purely organic compound which carries at least two organically polymerizable groups, and subsequent organic polymerization of the organically polymerizable groups of the mixture.

**12.** An organically modified, polymerized silicic acid polycondensate, obtained by

(a) hydrolytic condensation of a silane or silane blend according to one of the claims 1 to 6, wherein at least a part of the organically polymerizable groups at the substituent $R^1$ comprises a C=C double bond and/or a ring-opening system, wherein the obtained silicic acid polycondensate is further present in the form of a mixture with a purely organic compound carrying at least two organically polymerizable groups,
(b) addition of an organic, at least difunctional compound, selected from mercapto compounds and amines, in a molar deficient proportion with respect to the ratio of mercapto groups and/or amino groups to the C=C double bonds and/or the ring-opening systems, optionally further adding an initiator for the Michael addition between the C=C double bonds and/or ring-opening systems and the mercapto groups and/or amino groups, and
(c) a subsequent organic polymerization of the remaining organically polymerizable groups.

**13.** The use of an organically modified, polymerized silicic acid polycondensate according to any one of claims 8 to 12, for the production of an article which can be used biologically or in medicine or an article for the stabilization of cells or cell growth.

**14.** A process for the production of a silane or a silane blend according to any one of claims 1 to 6, wherein a silane having the formula (A) as defined in claim 1 is reacted with a compound $R^*(OH)_x$ as defined in claim 1, preferably in a molar ratio of between1 : 1.5 to 1 : 2.5, more preferably in a molar ratio of 1 : 2.

**15.** A process for the production of an organically polymerizable silicic acid polycondensate according to claim 7, comprising (a) the reaction of a silane represented by the formula (A) as defined in claim 1 with as compound $R^*(OH)_x$ as defined in claim 1, preferably in a molar ratio of between 1 : 1.5 to 1 : 2.5, more preferably in a molar ratio of 1 : 2, and (b) a subsequent, at least two-step hydrolysis of the obtained silane with a catalytic amount of water, wherein present or formed volatile components are removed after each hydrolysis step by application of a vacuum.

## Revendications

**1.** Silane ou mélange à base de silane qui peut être obtenu par réaction d'un silane hydrolysable de la formule (A)

$$SiR_4 \qquad (A)$$

dans laquelle R représente un groupe condensable par hydrolyse ou un groupe hydroxy, avec un composé

$$R^*(OH)_x,$$

où x est égal à 1, 2, 3 ou est supérieur à 3, dans laquelle R* comporte un squelette hydrocarboné linéaire ou ramifié, qui est monovalent, bivalent, trivalent ou polyvalent en fonction du nombre de x et dont la chaîne hydrocarbonée est interrompue par au moins deux groupes -C(O)O, dans lequel 8 atomes de carbone au maximum se suivent à l'intérieur de cette chaîne dans les unités hydrocarbonées individuelles formées par des interruptions et l'extrémité ou, dans le cas de structures ramifiées, au moins une extrémité, opposée au groupe hydroxy unique ou à l'un des groupes hydroxy, de la chaîne hydrocarbonée porte un groupe organiquement polymérisable, dans lequel le composé $R^*(OH)_x$ est par ailleurs non substitué ou comporte d'autres substituants, avec la condition que les silanes

suivants soient exclus: tétra(dicapryléthoxyacrylate) de silicium et

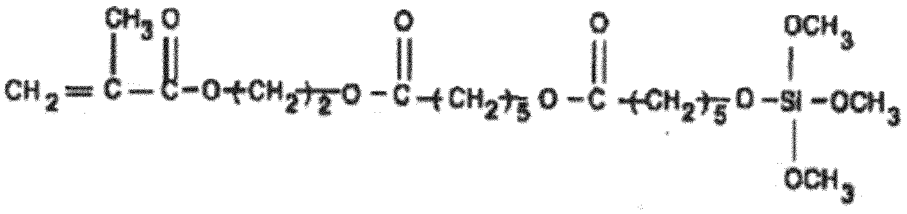

2. Silane ou mélange à base de silane selon la revendication 1, dans lequel chacun des groupes OH du composé $R^*(OH)_x$ est un groupe alcool ou un composant d'un groupe acide carboxylique, dans lequel des composés $R^*(OH)_x$ avec $x > 1$ peuvent contenir aussi bien des groupes alcool que des groupes acide carboxylique ou être des polyalcools ou des acides polycarboxyliques.

3. Silane de la formule (1)

$$R^1{}_aSiR_{4-a} \qquad (1)$$

dans laquelle $R^1$ a la signification d'un radical monovalent -OR*, dans laquelle R* est défini comme dans la revendication 1 et est lié à l'atome de silicium par l'atome d'oxygène, R signifie un groupe condensable par hydrolyse ou un groupe hydroxy et a est égal à 1, 2, 3 ou 4.

4. Silane ou mélange à base de silane selon l'une quelconque des revendications 1 à 3, dans lequel R possède la signification $R'COO^-$ ou OR' ou OH, dans lequel R' représente un groupe alkyle linéaire, ramifié ou comportant un anneau non aromatique, et est de préférence un groupe méthyle ou un groupe éthyle.

5. Silane ou mélange à base de silane selon l'une quelconque des revendications précédentes, dans lequel le groupe condensable par hydrolyse R est choisi parmi les groupes acyle, alkyle et alcoxy.

6. Mélange à base de silane composé de différents silanes, tels qu'ils sont revendiqués dans la revendication 3 ou dans une revendication qui en dépend, y compris les silanes exclus dans la revendication 1, dans lequel différents silanes du mélange possèdent le même substituant $R^1$ et différentes valeurs pour l'indice a, dans lequel la valeur moyenne pour a dans le mélange se situe à 2.

7. Polycondensat d'acide silicique organiquement modifié, formé par la condensation hydrolytique d'un silane ou d'un mélange à base de silane selon l'une quelconque des revendications 1 à 6.

8. Polycondensat d'acide silicique polymérisé organiquement modifié, formé par la condensation hydrolytique d'un silane ou d'un mélange à base de silane des revendications 1 à 6 suivie par la polymérisation organique des groupes organiquement polymérisables.

9. Polycondensat d'acide silicique polymérisé organiquement modifié, formé par

(a) condensation hydrolytique d'un silane ou d'un mélange à base de silane selon l'une quelconque des revendications 1 à 6, dans laquelle au moins une partie des radicaux organiquement polymérisables sur le substituant $R^1$ comportent une liaison double C=C et/ou un système à ouverture d'anneau,
(b) ajout d'un composé organique, au moins difonctionnel, choisi parmi les composés mercapto et les amines, dans une proportion molaire inférieure, rapportée au rapport de groupes mercapto et/ou amino aux liaisons doubles C=C et/ou aux systèmes à ouverture d'anneau, en option en outre avec ajout d'un initiateur pour l'addition de Michael qui se produit entre les liaisons doubles C=C et/ou les systèmes à ouverture d'anneau et les groupes mercapto et/ou amino, et
(c) ensuite polymérisation organique des groupes organiquement polymérisables résiduels.

10. Polycondensat d'acide silicique polymérisé organiquement modifié, formé par

(a) condensation hydrolytique d'un silane ou d'un mélange à base de silane selon l'une quelconque des revendications 1 à 6, dans laquelle au moins une partie des radicaux organiquement polymérisables sur le substituant

$R^1$ comportent une liaison double C=C et/un système à ouverture d'anneau, et
(b) ajout d'un composé organique, au moins difonctionnel, choisi parmi les composés mercapto et les amines, en une quantité telle qu'au moins un groupe mercapto ou amino soit disponible par groupe organiquement polymérisable, en option en outre avec ajout d'un initiateur pour l'addition de Michael qui se produit entre les liaisons doubles C=C et/ou les systèmes à ouverture d'anneau et les groupes mercapto et/ou amino, de telle manière que tous ces groupes réagissent avec les thiols ou les aminés par la réaction de réticulation.

**11.** Polycondensat d'acide silicique polymérisé organiquement modifié, formé par condensation hydrolytique d'un silane ou d'un mélange à base de silane selon l'une quelconque des revendications 1 à 6, dans lequel le polycondensat d'acide silicique ainsi formé se présente en mélange avec un composé purement organique, qui comporte au moins deux groupes organiquement polymérisables, et ensuite par polymérisation organique des groupes organiquement polymérisables du mélange.

**12.** Polycondensat d'acide silicique polymérisé organiquement modifié, formé par

(a) condensation hydrolytique d'un silane ou d'un mélange à base de silane selon l'une quelconque des revendications 1 à 6, dans laquelle au moins une partie des radicaux organiquement polymérisables sur le substituant $R^1$ comportent une liaison double C=C et/ou un système à ouverture d'anneau, dans lequel le polycondensat d'acide silicique ainsi formé se présente en outre en mélange avec un composé purement organique, qui comporte au moins deux groupes organiquement polymérisables,
(b) ajout d'un composé organique, au moins difonctionnel, choisi parmi les composés mercapto et les amines, dans une proportion molaire inférieure, rapportée au rapport de groupes mercapto et/ou amino aux liaisons doubles C=C et/ou aux systèmes à ouverture d'anneau, en option en outre avec ajout d'un initiateur pour l'addition de Michael qui se produit entre les liaisons doubles C=C et/ou les systèmes à ouverture d'anneau et les groupes mercapto et/ou amino, et
(c) ensuite polymérisation organique des groupes organiquement polymérisables résiduels.

**13.** Utilisation d'un polycondensat d'acide silicique polymérisé organiquement modifié selon l'une quelconque des revendications 8 à 12, pour la fabrication d'un objet utilisable en biologie ou en médecine ou d'un objet destiné à la stabilisation de cellules ou à la culture de cellules.

**14.** Procédé de fabrication d'un silane ou d'un mélange à base de silane selon l'une quelconque des revendications 1 à 6, dans lequel on fait réagir un silane de la formule (A) défini comme dans la revendication 1 avec un composé $R^*(OH)_x$ défini comme dans la revendication 1, de préférence en un rapport molaire compris entre 1:1,5 et 1:2,5, de préférence encore en un rapport molaire de 1:2.

**15.** Procédé de fabrication d'un polycondensat d'acide silicique organiquement polymérisable selon la revendication 7, comprenant

(a) la réaction d'un silane de la formule (A) défini comme dans la revendication 1 avec un composé $R^*(OH)_x$ défini comme dans la revendication 1, de préférence en un rapport molaire compris entre 1:1,5 et 1:2,5, de préférence encore en un rapport molaire de 1:2, et
(b) l'hydrolyse consécutive, en au moins deux étapes, du silane formé avec une quantité catalytique d'eau, dans lequel après chaque étape d'hydrolyse on élimine les composants volatils présents ou formés par application d'une dépression.

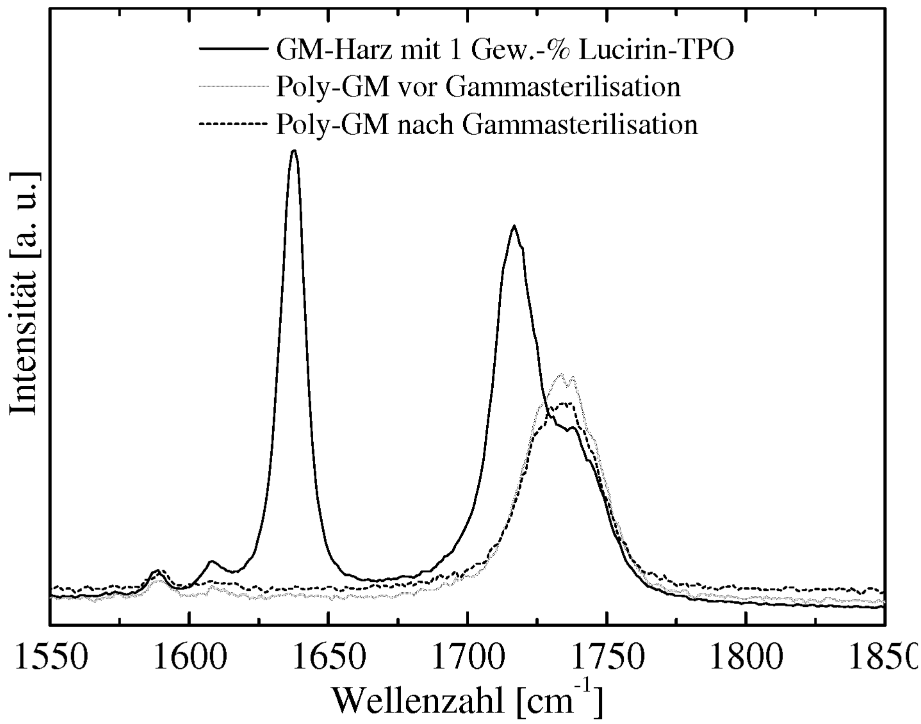


Figur 1

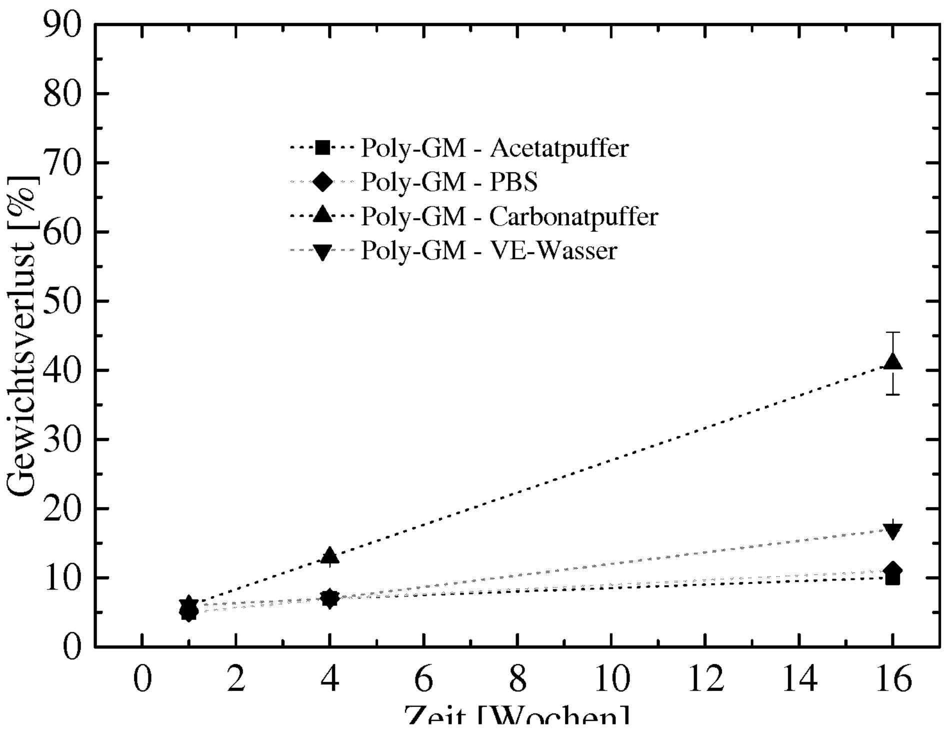


Figur 2

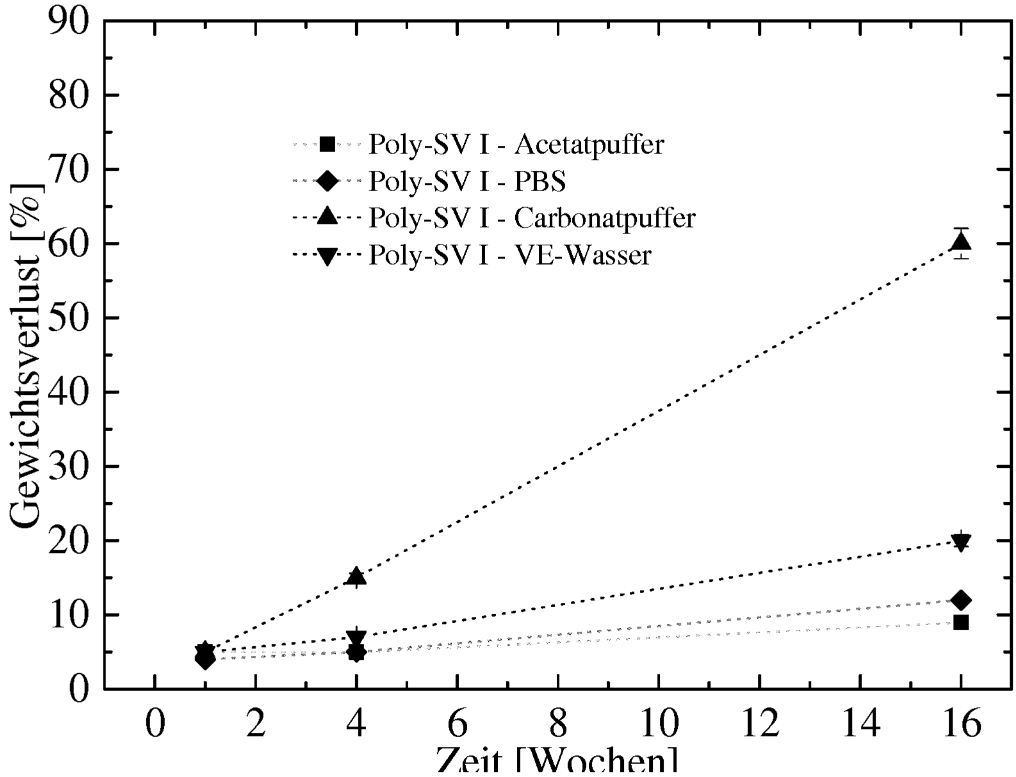


Figur 3

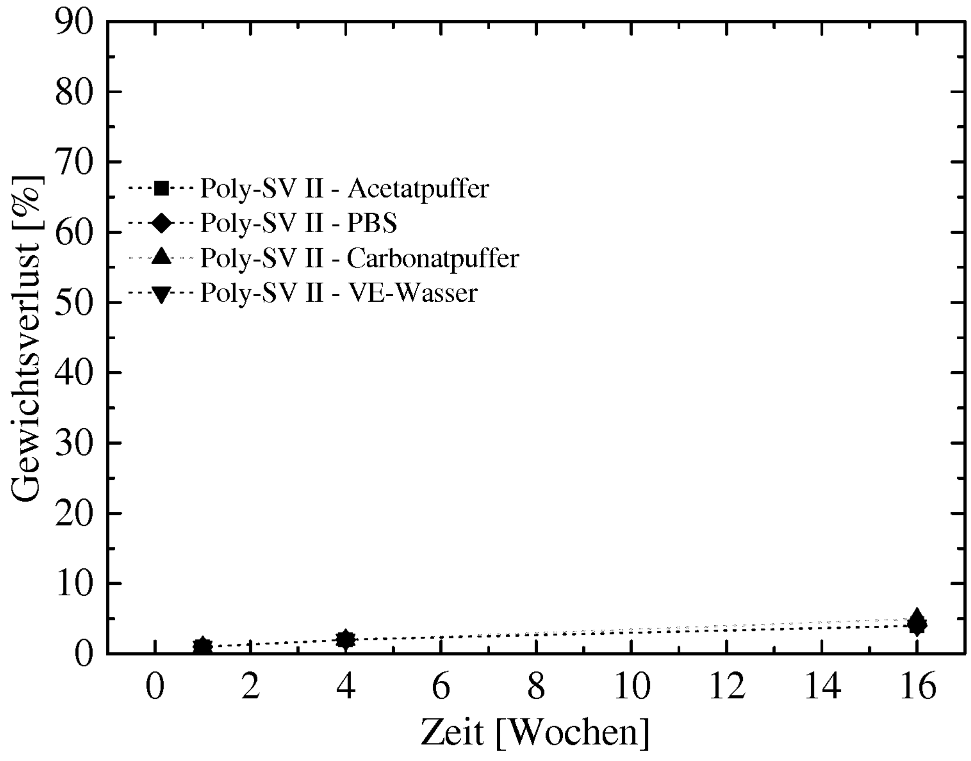


Figur 4

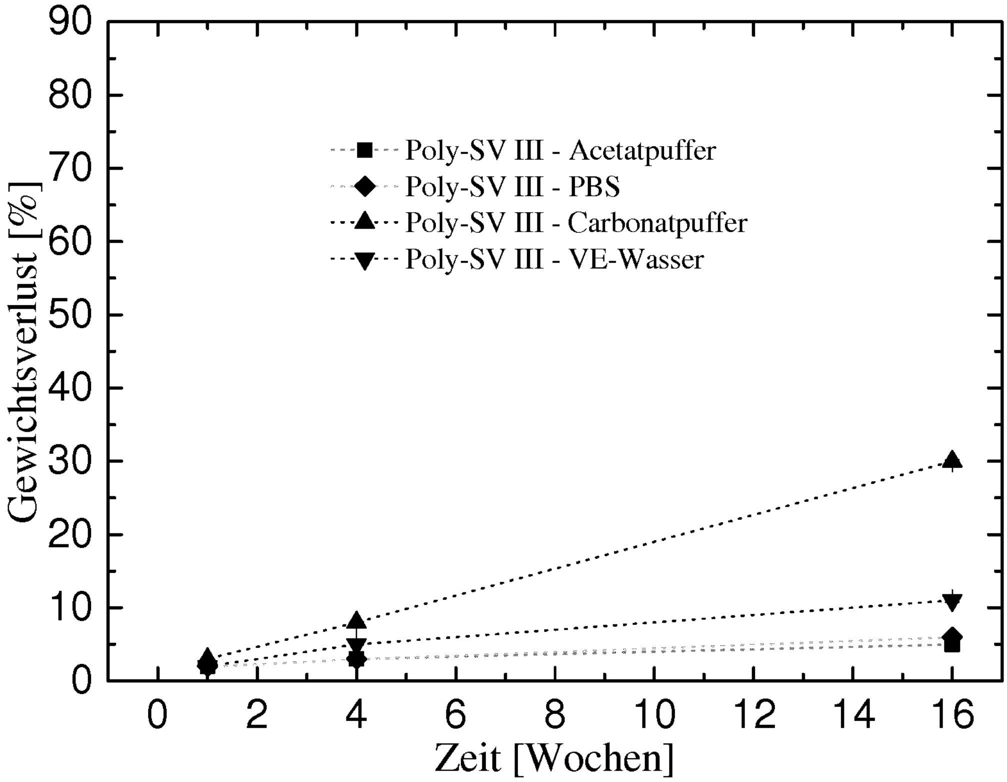


Figur 5

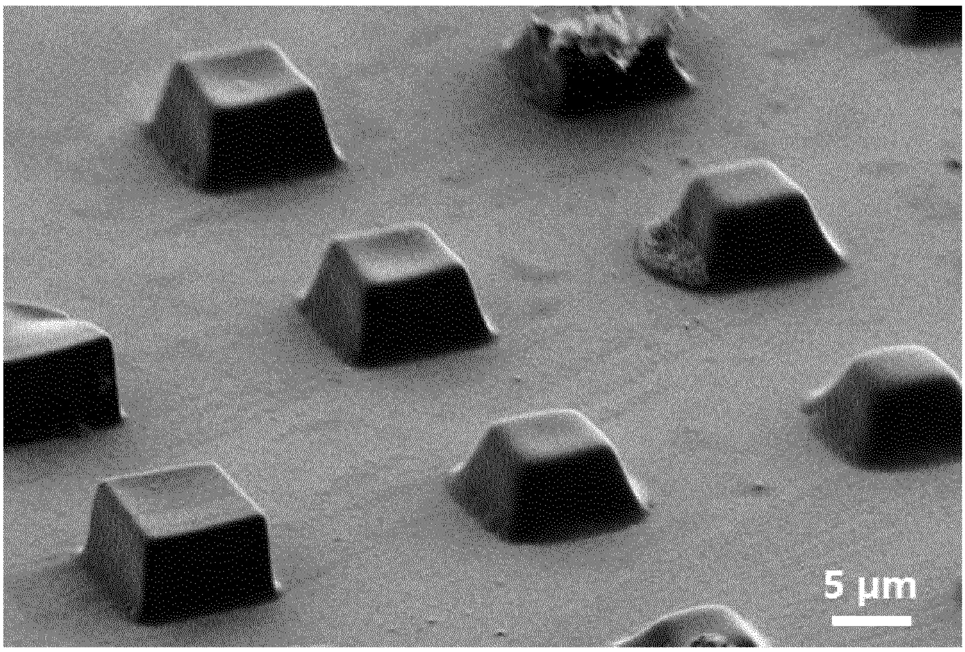


Figur 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011098460 A1
- JP H08199036 A
- WO 8600084 A


### In der Beschreibung aufgeführte Nicht-Patentliteratur


- **F. CLAEYSSENS et al.** Three-Dimensional Biodegradable Structures Fabricated by Two-Photon-Polymerization. *Langmuir,* 2009, vol. 25, 3219-3223
- **R. NARAYAN et al.** *Mater. Res. Soc. Symp. P,* 2005, vol. 845, 51
- *Acta Biomater.,* 2006, vol. 2, 267
- **D. TIAN et al.** Biodegradable and Biocompatible Inorganic-Organic Hybrid Materials. I. Synthesis and Characterization. *Journal of Polymer Science, Part A- Polymer Chemistry,* 1997, vol. 35 (11), 2295-2309
- **R. HOUBERTZ et al.** *Coherence and Ultrashort Pulse Laser Emission,* 2010, vol. 583
- **T. E. KRISTENSEN et al.** *Org. Lett.,* 2009, vol. 11, 2968
- **VORSCHRIFT VON WISEMAN et al.** *J. Am. Chem. Soc.,* 2005, vol. 127, 5540
- **VORSCHRIFT VON J. H. LIU ; D. S. WU ; K. Y. TSENG.** *Macromol. Chem. Physic.,* 2004, vol. 205, 2205